# EUROPEAN PATENT APPLICATION

(11) **EP 4 836 503 A1**
(43) Date of publication of application: **04.11.2026**
(21) Application number: 24910053.8
(22) Date of filing: 23.09.2024
(51) Int. Cl.: H04W 24/08

(54) **MEASUREMENT REPORTING METHOD AND APPARATUS, MEASUREMENT ACQUISITION METHOD AND APPARATUS, AND READABLE STORAGE MEDIUM**

(30) Priority: 29.12.2023 CN 202311869123
(71) Applicant: Datang Mobile Communications Equipment Co., Ltd., Beijing 100085 (CN)
(72) Inventor: SONG, Lei, Beijing 100085 (CN); GAO, Qiubin, Beijing 100085 (CN)
(74) Representative: Maiwald GmbH
(86) International application number: PCT/CN2024/120252
(87) International publication number: WO 2025/139108

(57) **Abstract**

The present disclosure provides a measurement reporting method, a measurement obtaining method, an apparatus, and a readable storage medium, relating to the field of communication technology. The measurement reporting method of the present disclosure includes: a terminal determining multiple measurement objects; the terminal sending, to a network-side device, first delay-related information and first phase-related information corresponding to the multiple measurement objects; wherein the first delay-related information is associated with the first phase-related information.

## Description

### CROSS-REFERENCE TO RELATED APPLICATIONS

This disclosure claims priority to Chinese Patent Application No. 202311869123.4, filed with the China National Intellectual Property Administration on December 29, 2023, and entitled "Measurement Reporting Method, Measurement Obtaining Method, Apparatus, and Readable Storage Medium," the entire contents of which are incorporated herein by reference.

### TECHNICAL FIELD

The present disclosure relates to the field of communication technology, and in particular, to a measurement reporting method, a measurement obtaining method, an apparatus, and a readable storage medium.

### BACKGROUND

In Coherent Joint Transmission (CJT), if the timing of multiple Transmission Reception Points (TRPs) is not synchronized or the uplink-downlink reciprocity is not ideal, it will lead to performance degradation of the coherent transmission of the multiple TRPs. If the synchronization error or reciprocity error is not eliminated, the performance advantages of CJT transmission cannot be realized.

### SUMMARY

The purpose of the present disclosure is to provide a measurement reporting method, a measurement obtaining method, an apparatus, and a readable storage medium, to solve the problem in related technologies that measurement reporting cannot accurately reflect frequency domain signal deviations and cannot eliminate reciprocity errors.

To achieve the above purpose, an embodiment of the present disclosure provides a measurement reporting method, including:
a terminal determining multiple measurement objects;
the terminal sending, to a network-side device, first delay-related information and first phase-related information corresponding to the multiple measurement objects; wherein the first delay-related information is associated with the first phase-related information.

In some embodiments, the method further includes:
the terminal sending, to the network-side device, amplitudes corresponding to the multiple measurement objects.

In some embodiments, the method further includes:
the terminal determining one or more second phase-related information items of the multiple measurement objects, and second delay-related information corresponding to the second phase-related information;
the terminal performing, based on the second delay-related information, delay removal processing on the second phase-related information to obtain third phase-related information;
the terminal obtaining the first phase-related information by quantizing the third phase-related information.

In some embodiments, the terminal performing, based on the second delay-related information, delay removal processing on the second phase-related information to obtain third phase-related information includes:
the terminal subtracting a first value from the second phase-related information to obtain the third phase-related information;
wherein the first value is calculated using the formula mod(2π*f*₀*τ*, 2*π*); wherein τ is the second delay-related information; f0*f*0 is a configured frequency value, or a center frequency value corresponding to a specific transmission resource, or a frequency value determined by at least one of: a center frequency value corresponding to a first transmission resource, a subcarrier spacing, a resource granularity, and a subcarrier format included in each resource block.

In some embodiments, the terminal obtaining the first phase-related information by quantizing the third phase-related information includes:
the terminal quantizing the third phase-related information using a quantization codebook to determine the first phase-related information.

In some embodiments, the quantization codebook includes at least one of the following:
First codebook, the first codebook includes N-1 ***W*₁**, and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$, *i* = 0,1,2, ··· , *N* - 1;
Second codebook, the second codebook includes P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ···, *P* - 1; wherein a value of P is configured by higher layer parameters, P is less than or equal to N;
Third codebook, the third codebook includes N-1 ***W*₃**, and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$*, iₖ* = 0,1,2, ··· *,N* - 1; *k =* 1,2,··· , *K-*1;
Fourth codebook, the fourth codebook includes *N₁* - 1 ***W*₄***,* and each of the *N*₁ - 1 ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$*, i*₁ = 0,1,2,··· , *N₁* - 1 , ... , *i*_{*K-*1} = 0,1,2, ···*, N*_{*K*-1} - 1; wherein values of *Np* are configured by higher layer parameters or predefined in a protocol, p = 1,2, ···, K - 1;
Fifth codebook, the fifth codebook includes P-1 ***W*₅,** and each of the P-1 ***W*₃** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$*, iₖ* = 0,1,2, ··· , *P* - 1; *k =* 1,2, *··· , K* ; wherein a value of P is configured by higher layer parameters, P is less than or equal to N;
Sixth codebook, the sixth codebook includes P₁ - 1 ***W*₆**, and each of the P₁ - 1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, *··· ,* P₁ - 1, ··· , i_{K-1} = P_{K-1} - 1; wherein values of P_{q} are configured by higher layer parameters, q = 1,2, ··· , K - 1;
   wherein N is a positive integer, and K is determined by the number of measurement objects.

In some embodiments, the terminal sending, to the network-side device, the first phase-related information corresponding to the multiple measurement objects includes:
the terminal jointly reporting the first phase-related information associated with a same first delay-related information; or,
the terminal jointly reporting the first phase-related information corresponding to a measurement resource of a same measurement object; or,
the terminal jointly reporting the first phase-related information corresponding to multiple reported first delay-related information items; or,
the terminal jointly reporting multiple first phase-related information items corresponding to a same subband; or,
the terminal jointly reporting first phase-related information items of a same type; or,
the terminal jointly reporting all determined first phase-related information.

In some embodiments, the method further includes:
the terminal determining a maximum phase value or a minimum phase value in a group of phase-related information reported jointly, and preprocessing each first phase-related information item in the group of phase-related information reported jointly based on the maximum phase value or the minimum phase value.

In some embodiments, the method further includes:
the terminal sending, to the network-side device, at least one of the following:
a maximum phase value or a minimum phase value of each group of phase-related information;
a subband index corresponding to the maximum phase value or the minimum phase value in each group of phase-related information;
a first delay-related information index corresponding to the maximum phase value or the minimum phase value in each group of phase-related information;
a measurement resource index corresponding to the maximum phase value or the minimum phase value in each group of phase-related information.

In some embodiments, the amplitudes corresponding to the multiple measurement objects include at least one of the following:
weighting values for the first delay-related information;
weighting values for the first phase-related information;
weighting coefficients for the first delay-related information;
weighting coefficients for the first phase-related information.

In some embodiments, the terminal sending, to the network-side device, the amplitudes corresponding to the multiple measurement objects includes:
the terminal jointly reporting amplitudes corresponding to a measurement resource of a same measurement object; or,
the terminal jointly reporting amplitudes of a same type; or,
the terminal jointly reporting amplitudes corresponding to a same first delay-related information; or,
the terminal jointly reporting amplitudes corresponding to a same first phase-related information; or,
the terminal jointly reporting amplitudes corresponding to all determined first delay-related information; or,
the terminal jointly reporting amplitudes corresponding to all determined first phase-related information; or,
the terminal reporting all the amplitudes.

In some embodiments, the method further includes:
the terminal determining a maximum amplitude in a group of amplitudes reported jointly, and preprocessing each amplitude in the group of amplitudes reported jointly based on the maximum amplitude.

In some embodiments, the method further includes:
the terminal sending, to the network-side device, at least one of the following:
a maximum amplitude of each group of amplitudes;
a subband index corresponding to the maximum amplitude in each group of amplitudes;
a delay difference index corresponding to the maximum amplitude in each group of amplitudes;
a measurement resource index corresponding to the maximum amplitude in each group of amplitudes.

In some embodiments, the terminal sending, to the network-side device, the first delay-related information corresponding to the multiple measurement objects includes:
the terminal determining reference delay-related information among multiple items of the first delay-related information;
the terminal determining differences between the multiple items of the first delay-related information and the reference delay-related information;
the terminal sending the differences and the reference delay-related information.

In some embodiments, the terminal sending, to the network-side device, the first delay-related information corresponding to the multiple measurement objects includes:
the terminal sequentially reporting multiple items of the first delay-related information based on a preset sorting strategy.

In some embodiments, the method further includes:
when sending the first phase-related information to the network-side device, the terminal sending information of a phase range used for quantization;
when sending the first delay-related information to the network-side device, the terminal sending information of a time range used for quantization.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
the terminal reporting the information of the phase range or the information of the time range used for quantization includes:
the terminal sending at least one of a, b, and w.

To achieve the above purpose, an embodiment of the present disclosure further provides a measurement reporting method, including:
a terminal determining multiple measurement objects;
the terminal sending, to a network-side device, first delay-related information or first phase-related information corresponding to the multiple measurement objects;
when sending the first phase-related information to the network-side device, the terminal sending information of a phase range used for quantization;
when sending the first delay-related information to the network-side device, the terminal sending information of a time range used for quantization.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
the terminal reporting the information of the phase range or the information of the time range used for quantization includes:
the terminal sending at least one of a, b, and w.

In some embodiments, quantization granularities or numbers of quantization values are different for different phase ranges or different time ranges, wherein quantization granularity values or numbers of quantization values corresponding to the phase ranges or the time ranges are predefined by a protocol.

In some embodiments, the first phase-related information is determined based on at least one of the following codebooks:
First codebook, the first codebook includes N-1 ***W*₁**, and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$*, i* = 0,1,2, ··· *, N* - 1;
Second codebook, the second codebook includes P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ···, *P-*1; wherein a value of P is configured by higher layer parameters, P is less than or equal to N;
Third codebook, the third codebook includes N-1 ***W*₃**, and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,··· , *N* - 1; *k* = 1,2, ··· , *K-*1;
Fourth codebook, the fourth codebook includes *N*₁ *-* 1 ***W*₄,** and each of the *N*₁ - 1 ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$*, i*₁ = 0,1,2, ···, *N*₁ - 1 *, ··· , i*_{*K*-1} = 0,1,2, ··· *, N*_{*K*-1} *-* 1; wherein values of *Np* are configured by higher layer parameters or predefined in a protocol, p = 1,2, ··· , K - 1;
Fifth codebook, the fifth codebook includes P-1 ***W*₅**, and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ··· , *P* - 1; *k* = 1,2, ··· , *K* ; wherein a value of P is configured by higher layer parameters, P is less than or equal to N;
Sixth codebook, the sixth codebook includes P₁ - 1 ***W*₆**, and each of the P₁ - 1 ***W***₆ is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ··· *,* P₁ - 1, *··· ,* i_{K-1} = 0,1,2, ··· , P_{K-1} - 1; wherein values of P_{q} are configured by higher layer parameters, q = 1,2, ··· , K - 1;
   wherein N is a positive integer, and K is determined by the number of measurement objects.

In some embodiments, the terminal sending, to the network-side device, the first phase-related information corresponding to the multiple measurement objects includes:
the terminal jointly reporting the first phase-related information associated with a same delay-related information; or,
the terminal jointly reporting the first phase-related information corresponding to a measurement resource of a same measurement object; or,
the terminal jointly reporting multiple first phase-related information items corresponding to a same subband; or,
the terminal jointly reporting first phase-related information items of a same type; or,
the terminal jointly reporting all determined first phase-related information.

To achieve the above purpose, an embodiment of the present disclosure further provides a measurement obtaining method, including:
a network-side device receiving first delay-related information and first phase-related information sent by a terminal corresponding to multiple measurement objects; wherein the first delay-related information is associated with the first phase-related information.

In some embodiments, the network-side device receives amplitudes sent by the terminal corresponding to the multiple measurement objects.

In some embodiments, the first phase-related information is determined based on a quantization codebook;
the quantization codebook includes at least one of the following:
First codebook, the first codebook includes N-1 ***W*₁**, and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$*, i* = 0,1,2, ··· *,* N - 1;
Second codebook, the second codebook includes P-1 ***W*₂,** and each of the P-1 *W₂* is different, ${W}_{2} = \frac{1}{\sqrt{2}} \left[\begin{matrix}1 \\ {e}^{\frac{j 2 πi}{N}}\end{matrix}\right]$, *i* = 0,1,2, ··· , *P* - 1; wherein a value of P is configured by higher layer parameters, P is less than or equal to N;
Third codebook, the third codebook includes N-1 ***W*₃**, and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ··· , *N* - 1; *k* = 1,2, ··· , *K-*1;
Fourth codebook, the fourth codebook includes *N₁* - 1 ***W*₄,** and each of the *N₁* - 1 ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$*, i*₁ = 0,1,2, ··· , *N*₁ - 1 , ··· , *i*_{*K*-1} = 0,1,2, ··*· , N*_{*K*-1} *-* 1; wherein values of *Np* are configured by higher layer parameters or predefined in a protocol, p = 1,2, ··· , K - 1;
Fifth codebook, the fifth codebook includes P-1 ***W*₅**, and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ··· , *P* - 1; *k* = 1,2, *··· , K* ; wherein a value of P is configured by higher layer parameters, P is less than or equal to N;
Sixth codebook, the sixth codebook includes P₁ - 1 ***W*₆**, and each of the P₁ - 1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ··· *,* P₁ - 1, ··· , i_{K-1} = 0,1,2, ···, P_{K-1} - 1; wherein values of P_{q} are configured by higher layer parameters, q = 1,2, ··· , K - 1;
   wherein N is a positive integer, and K is determined by the number of measurement objects.

In some embodiments, the method further includes:
the network-side device receiving at least one of the following sent by the terminal:
a maximum phase value or a minimum phase value of each group of phase-related information;
a subband index corresponding to the maximum phase value or the minimum phase value in each group of phase-related information;
a delay-related information index corresponding to the maximum phase value or the minimum phase value in each group of phase-related information;
a measurement resource index corresponding to the maximum phase value or the minimum phase value in each group of phase-related information.

In some embodiments, the amplitudes corresponding to the multiple measurement objects include at least one of the following:
weighting values for the first delay-related information;
weighting values for the first phase-related information;
weighting coefficients for the first delay-related information;
weighting coefficients for the first phase-related information.

In some embodiments, the network-side device receives at least one of the following sent by the terminal:
a maximum amplitude of each group of amplitudes;
a subband index corresponding to the maximum amplitude in each group of amplitudes;
a delay difference index corresponding to the maximum amplitude in each group of amplitudes;
a measurement resource index corresponding to the maximum amplitude in each group of amplitudes.

In some embodiments, the first delay-related information corresponding to the multiple measurement objects includes:
reference delay-related information and differences corresponding to the reference delay-related information.

In some embodiments, the method further includes:
the network-side device receiving at least one of the following used for quantization sent by the terminal:
information of a phase range;
information of a time range.

To achieve the above purpose, an embodiment of the present disclosure further provides a measurement obtaining method, including:
a network-side device receiving first delay-related information or first phase-related information sent by a terminal corresponding to multiple measurement objects;
the network-side device receiving information of a phase range or information of a time range used for quantization sent by the terminal.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
the network-side device receiving the information of the phase range or the information of the time range used for quantization sent by the terminal includes:
the network-side device receiving at least one of a, b, and w reported by the terminal.

In some embodiments, quantization granularities or numbers of quantization values are different for different phase ranges or different time ranges, wherein quantization granularity values or numbers of quantization values corresponding to the phase ranges or the time ranges are predefined by a protocol.

In some embodiments, the phase-related information is determined based on at least one of the following codebooks:
First codebook, the first codebook includes N-1 ***W*₁**, and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$, *i* = 0,1,2, ··· , *N* - 1;
Second codebook, the second codebook includes P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ··· , *P-*1; wherein a value of P is configured by higher layer parameters, P is less than or equal to N;
Third codebook, the third codebook includes N-1 ***W*₃**, and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$*, iₖ* = 0,1,2, ··· , *N* - 1; *k* = 1,2, ···, *K-*1;
Fourth codebook, the fourth codebook includes *N₁ -* 1 ***W*₄,** and each of the *N₁* - 1 ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$*, i*₁ = 0,1,2, ··· , *N*₁ - 1 *,* ··· *, i*_{*K*-1} = 0,1,2, ··· , *N*_{*K*-1} - 1 ; wherein values of *Np* are configured by higher layer parameters or predefined in a protocol, p = 1,2, ··· , K - 1;
Fifth codebook, the fifth codebook includes P-1 ***W*₅,** and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$*, iₖ* = 0,1,2, ··· ,P - 1; *k* = 1,2, ··· , *K* ; wherein a value of P is configured by higher layer parameters, P is less than or equal to N;
Sixth codebook, the sixth codebook includes P₁ - 1 ***W*₆**, and each of the P₁ - 1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ··· *,* P₁ - 1, *··· ,* i_{K-1} = 0,1,2,··· , P_{K-1} - 1; wherein values of P_{q} are configured by higher layer parameters, q = 1,2, ··· , K - 1;
   wherein N is a positive integer, and K is determined by the number of measurement objects.

To achieve the above purpose, an embodiment of the present disclosure further provides a measurement reporting apparatus, including: a memory, a transceiver, and a processor;
the memory is configured to store program instructions; the transceiver is configured to send and receive data under the control of the processor; the processor is configured to read the program instructions in the memory and execute the following operations:
determining multiple measurement objects;
sending, to a network-side device, first delay-related information and first phase-related information corresponding to the multiple measurement objects; wherein the first delay-related information is associated with the first phase-related information.

In some embodiments, the processor is further configured to:
send, to the network-side device, amplitudes corresponding to the multiple measurement objects.

In some embodiments, the processor is further configured to:
when sending the first phase-related information to the network-side device, send information of a phase range used for quantization;
when sending the first delay-related information to the network-side device, send information of a time range used for quantization.

To achieve the above purpose, an embodiment of the present disclosure further provides a measurement reporting apparatus, including:
a first determination module configured to determine multiple measurement objects;
a first sending module configured to send, to a network-side device, first delay-related information and first phase-related information corresponding to the multiple measurement objects; wherein the first delay-related information is associated with the first phase-related information.

To achieve the above purpose, an embodiment of the present disclosure further provides a measurement reporting apparatus, including: a memory, a transceiver, and a processor;
the memory is configured to store program instructions; the transceiver is configured to send and receive data under the control of the processor; the processor is configured to read the program instructions in the memory and execute the following operations:
determining multiple measurement objects;
sending, to a network-side device, first delay-related information or first phase-related information corresponding to the multiple measurement objects;
when sending the first phase-related information to the network-side device, sending information of a phase range used for quantization;
when sending the first delay-related information to the network-side device, sending information of a time range used for quantization.

To achieve the above purpose, an embodiment of the present disclosure further provides a measurement reporting apparatus, including:
a second determination module configured to determine multiple measurement objects;
a second sending module configured to send, to a network-side device, first delay-related information or first phase-related information corresponding to the multiple measurement objects;
a third sending module configured to, when sending the first phase-related information to the network-side device, send information of a phase range used for quantization;
a fourth sending module configured to, when sending the first delay-related information to the network-side device, send information of a time range used for quantization.

To achieve the above purpose, an embodiment of the present disclosure further provides a measurement obtaining apparatus, including: a memory, a transceiver, and a processor; the memory is configured to store program instructions; the transceiver is configured to send and receive data under the control of the processor; the processor is configured to read the program instructions in the memory and execute the following operations:
receiving first delay-related information and first phase-related information sent by a terminal corresponding to multiple measurement objects; wherein the first delay-related information is associated with the first phase-related information.

To achieve the above purpose, an embodiment of the present disclosure further provides a measurement obtaining apparatus, including:
a first receiving module configured to receive first delay-related information and first phase-related information sent by a terminal corresponding to multiple measurement objects; wherein the first delay-related information is associated with the first phase-related information.

To achieve the above purpose, an embodiment of the present disclosure further provides a measurement obtaining apparatus, including: a memory, a transceiver, and a processor; the memory is configured to store program instructions; the transceiver is configured to send and receive data under the control of the processor; the processor is configured to read the program instructions in the memory and execute the following operations:
receiving first delay-related information or first phase-related information sent by a terminal corresponding to multiple measurement objects;
receiving information of a phase range or information of a time range used for quantization sent by the terminal.

To achieve the above purpose, an embodiment of the present disclosure further provides a measurement obtaining apparatus, including:
a second receiving module configured to receive first delay-related information or first phase-related information sent by a terminal corresponding to multiple measurement objects;
a third receiving module configured to receive information of a phase range or information of a time range used for quantization sent by the terminal.

To achieve the above purpose, an embodiment of the present disclosure further provides a processor-readable storage medium, wherein the processor-readable storage medium stores a computer program, and the computer program is configured to cause the processor to execute the measurement reporting method as described above, or the measurement obtaining method as described above.

The above technical solution of the present disclosure has at least the following beneficial effects:

In the above technical solution of the embodiments of the present disclosure, the terminal determines multiple measurement objects; the terminal sends, to the network-side device, the first delay-related information and the first phase-related information corresponding to the multiple measurement objects; wherein the first delay-related information is associated with the first phase-related information. When reporting multiple measurement objects, the present disclosure reports the associated delay-related information and phase-related information, which can eliminate time differences, phase differences, or reciprocity errors caused by reporting multiple measurement objects, thereby improving the accuracy of terminal measurement reporting.

### BRIEF DESCRIPTION OF THE DRAWINGS

FIG. 1 is one of the flowcharts of a measurement reporting method applied to a terminal according to an embodiment of the present disclosure;
FIG. 2 is a second flowchart of a measurement reporting method applied to a terminal according to an embodiment of the present disclosure;
FIG. 3 is one of the flowcharts of a measurement obtaining method applied to a network-side device according to an embodiment of the present disclosure;
FIG. 4 is a second flowchart of a measurement obtaining method applied to a network-side device according to an embodiment of the present disclosure;
FIG. 5 is a first structural block diagram of a measurement reporting apparatus applied to a terminal according to an embodiment of the present disclosure;
FIG. 6 is a second structural block diagram of a measurement reporting apparatus applied to a terminal according to an embodiment of the present disclosure;
FIG. 7 is a third structural block diagram of a measurement reporting apparatus applied to a terminal according to an embodiment of the present disclosure;
FIG. 8 is a fourth structural block diagram of a measurement reporting apparatus applied to a terminal according to an embodiment of the present disclosure;
FIG. 9 is a first structural block diagram of a measurement obtaining apparatus applied to a network-side device according to an embodiment of the present disclosure;
FIG. 10 is a second structural block diagram of a measurement obtaining apparatus applied to a network-side device according to an embodiment of the present disclosure;
FIG. 11 is a third structural block diagram of a measurement obtaining apparatus applied to a network-side device according to an embodiment of the present disclosure;
FIG. 12 is a fourth structural block diagram of a measurement obtaining apparatus applied to a network-side device according to an embodiment of the present disclosure.

### DETAILED DESCRIPTION

In the embodiments of the present disclosure, the term "and/or" describes an association relationship of associated objects, and indicates that three relationships may exist. For example, A and/or B may indicate: A exists alone, A and B exist simultaneously, and B exists alone. The character "/" generally indicates that associated objects before and after the character are in an "or" relationship.

In the embodiments of the present disclosure, the term "multiple" means two or more, and other quantifiers are similar thereto.

The technical solutions in embodiments of the present disclosure will be clearly and completely described below with reference to the accompanying drawings in the embodiments of the present disclosure. Apparently, the described embodiments are merely a part of embodiments of the present disclosure, rather than all embodiments of the present disclosure. Based on the embodiments in the present disclosure, all other embodiments obtained by those of ordinary skill in the art without creative efforts shall fall within the protection scope of the present disclosure.

To enable those skilled in the art to better understand the embodiments of the present disclosure, the following description is first provided:

### I. CJT Transmission

CJT technology supports coherent transmission of up to 4 TRPs. Assume the channels between the 4 TRPs and a User Equipment (UE) are respectively Hᵢ. The signal y received by the UE can be expressed as:
$y = \left[{H}_{1} {H}_{2} {H}_{3} {H}_{4}\right] Wx + n$
where W is the precoding codeword when the 4 TRPs perform joint transmission, x is the signal sent by each TRP, and n is the receiver noise. From the above equation, it can be seen that in CJT transmission, the precoding codewords of all TRPs can be written in the form of a joint matrix, i.e., the precoding codeword is jointly determined based on the channel conditions of all TRPs.

### II. Measurement Reporting Technology:

Current systems support beam measurement reporting and Channel State Information (CSI) measurement reporting. In CSI reporting, the network side can configure a CSI resource setting for the UE, containing one or more CSI resource sets, each CSI resource set containing one or more CSI Reference Signal (CSI-RS) resources. The UE reports according to the reporting quantity configured by the network side. For example, the reporting quantity configured by the network side is as follows:

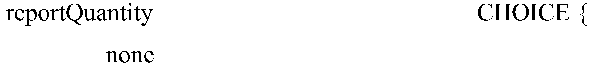

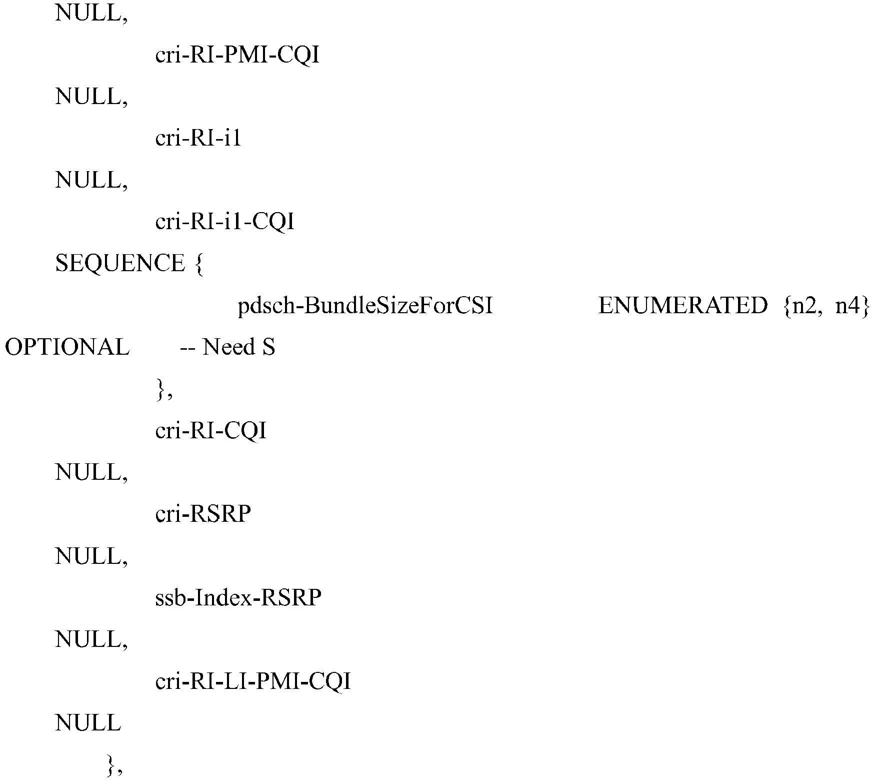

Here, CSI or Synchronization Signal Block Index (ssb-Index) refers to the index of a CSI-RS resource or a Synchronization Signal Block (SSB) resource, indicating subsequent reporting quantities measured by the UE based on the index of the CSI-RS resource or SSB resource, such as Rank Indication (RI), Precoding Matrix Indicator (PMI), Channel Quality Indicator (CQI), etc.

Embodiments of the present disclosure provide a measurement reporting method, a measurement obtaining method, an apparatus, and a readable storage medium. The methods and apparatuses are based on the same application concept. Since the methods and apparatuses solve problems based on similar principles, the implementation of the apparatus and the method can refer to each other, and repeated descriptions will be omitted.

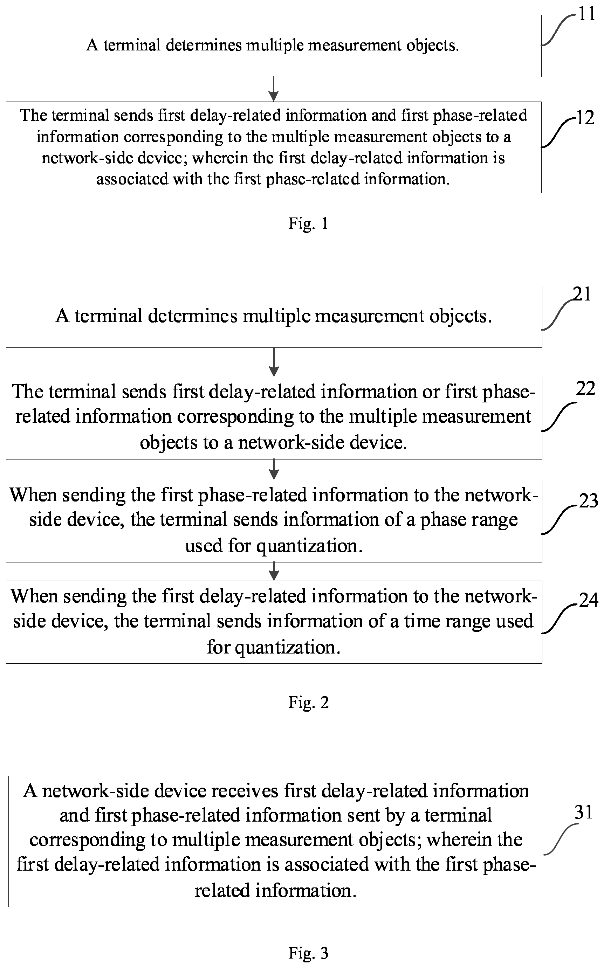

As shown in FIG. 1, a measurement reporting method provided by an embodiment of the present disclosure includes:

### Step 11: A terminal determines multiple measurement objects.

In the present disclosure, the measurement object may be a measurement resource or a measurement resource port. For example, one measurement resource includes multiple measurement resource ports, and the multiple measurement objects may be multiple measurement resource ports of one measurement resource, or the multiple measurement objects may be multiple measurement resources or multiple resource ports respectively corresponding to multiple measurement resources, or the multiple measurement objects may be multiple measurement resource sets. For another example, one measurement resource port corresponds to one TRP, and multiple measurement objects may represent multiple TRPs. The present disclosure does not limit this.

For example, taking the measurement object as a measurement resource. The network side configures multiple measurement resources for the UE. The measurement resources may be CSI-RS resources, or SSB resources, CSI-RS for Tracking (TRS) resources, etc. The multiple measurement resources may be configured in one measurement resource set (e.g., CSI-RS resource set) or in multiple measurement resource sets. The present disclosure does not limit this. One measurement resource, or multiple measurement resources in one measurement resource set, corresponds to one TRP.

Step 12: The terminal sends, to a network-side device, first delay-related information and first phase-related information corresponding to the multiple measurement objects; wherein the first delay-related information is associated with the first phase-related information.

Here, the first delay-related information includes delay or delay difference, and the first phase-related information includes phase or phase difference.

It should be noted that when measuring reciprocity error, the phase difference is essentially the phase difference between the frequency-domain channel impulse responses of two TRPs. When measuring time error, the phase difference is the phase difference between the channel impulse responses of another TRP on different frequency domains when receiving based on the timing of one TRP, which essentially corresponds to the delay difference between the two TRPs.

In the embodiment of the present disclosure, the terminal sends, to the network-side device, the first delay-related information corresponding to the multiple measurement objects, and sends the first phase-related information associated with the first delay-related information. The first delay-related information may be a measured delay or a delay obtained after measurement and processing. The first phase-related information may be calculated from the measured phase and the corresponding measured delay. By simultaneously sending associated delay and phase, the present disclosure eliminates the delay difference or phase difference between multiple measurement objects through preprocessing by the network-side device, reducing feedback overhead.

In some embodiments, the multiple measurement objects are configured by the network side for the UE. The specific configuration is implemented by one or more measurement resource sets:

Configure P1 measurement resource sets, each measurement resource set contains at least one measurement resource. Then the UE measures and reports based on at least one measurement resource in each of the at least 2 measurement resource sets.

Configure 1 measurement resource set containing multiple measurement resources. Then the UE measures and reports based on at least 2 measurement resources.

Configure 1 measurement resource set containing 1 measurement resource. Then the UE measures and reports (delay difference, frequency difference, phase difference) based on at least 2 antenna ports of the measurement resource.

In some embodiments, in the embodiments of the present disclosure, the terminal may also send mutually independent first delay-related information and first phase-related information to the network-side device. For example, the first delay-related information and the first phase-related information may be measured separately, or measured separately and then reported after processing, or the first delay-related information and the first phase-related information may be reported in one report, but the first delay-related information and the first phase-related information are quantized independently.

The embodiments of the present disclosure provide a delay difference measurement method: The UE detects measurement resources (e.g., SSB resources) sent by two TRPs, determines the timing of each TRP based on the distance of the detected autocorrelation peak positions. For example, if the first detected peak corresponds to the reception time of the first TRP, and the second detected peak corresponds to the reception time of the second TRP, assuming the transmission time difference of the measurement resources of the two TRPs is T₁, and the reception peak difference is T₂, then the delay difference between the two TRPs is T₂-T₁.

The embodiments of the present disclosure provide a phase difference measurement method: During time error measurement, still taking two TRPs as an example, assuming TRP 1 is used as a reference, the UE performs downlink reception according to the timing of TRP 1. When receiving the measurement resource sent by TRP 2, the UE calculates the phase difference of the frequency-domain channel impulse response on the same Resource Block (RB) (group) based on the channel between a reference antenna of TRP 2 and a reference antenna of the UE. This phase difference corresponds to the time difference between TRP 2 and TRP 1.

In some embodiments, when the UE performs measurement reporting, the reporting format of the UE may be:
report the first delay-related information first, then the first phase-related information; or,
when dividing multiple measurement resources into multiple measurement resource combinations, first report the first delay-related information and the first phase-related information corresponding to one measurement resource (combination), then report the first delay-related information and the first phase-related information corresponding to other measurement resources (combinations).

In an optional embodiment, the method of the present disclosure further includes:
the terminal sending, to the network-side device, amplitudes corresponding to the multiple measurement objects.

In the embodiment of the present disclosure, when the terminal performs measurement reporting to the network-side device, it may report the amplitudes corresponding to the multiple measurement objects while reporting the first delay-related information and the first phase-related information. The present disclosure simultaneously reports at least one of the first delay-related information, the first phase-related information, the amplitude corresponding to the first delay-related information, and the amplitude corresponding to the first phase-related information. Through this method, time differences, phase differences, or reciprocity errors between multiple TRPs can be accurately eliminated.

For example, when the first delay-related information includes delay difference and the first phase-related information includes phase difference, when the UE reports the delay difference, phase difference, and amplitude, the reporting format of the UE may be:
report the delay difference and phase difference first, then report the amplitude (the order of phase difference and amplitude can be reversed); or,
report the delay difference, phase difference, and amplitude corresponding to one measurement resource (combination), then report the delay difference, phase difference, and amplitude corresponding to other measurement resource combinations.

In some embodiments, when the terminal performs measurement reporting to the network-side device, it may report at least two of the first delay-related information, the first phase-related information, and the amplitude between multiple measurement objects. For example, the present disclosure may report the first delay-related information and the first phase-related information; or may report the first delay-related information and the amplitude for measurement reporting, etc.

In an optional embodiment, the method of the present disclosure further includes:
the terminal determining one or more second phase-related information items of the multiple measurement objects, and second delay-related information corresponding to the second phase-related information;
the terminal performing, based on the second delay-related information, delay removal processing on the second phase-related information to obtain third phase-related information;
the terminal obtaining the first phase-related information by quantizing the third phase-related information.

In the embodiment of the present disclosure, the first phase-related information is the phase (or phase difference) after removing the influence of delay (or delay difference). After determining one or more second phase-related information items, the terminal can determine the second delay-related information corresponding to the second phase-related information. The one or more second phase-related information items may correspond to one piece of second delay-related information. The present disclosure performs delay removal processing on the second phase-related information based on the second delay-related information to obtain third phase-related information, which helps eliminate possible errors and interference, improving the reliability and accuracy of the measurement result; the terminal quantizes the third phase-related information to obtain the first phase-related information associated with the first delay-related information, and reporting the quantized first phase-related information can reduce transmission consumption.

In some embodiments, the terminal performing, based on the second delay-related information, delay removal processing on the second phase-related information to obtain third phase-related information includes:
the terminal subtracting a first value from the second phase-related information to obtain the third phase-related information;
wherein the first value is calculated using the formula mod(2*πf*₀*τ*, 2*π*); wherein τ is the second delay-related information; *f*₀ is a configured frequency value, or a center frequency value corresponding to a specific transmission resource, or a frequency value determined by at least one of: a center frequency value corresponding to a first transmission resource, a subcarrier spacing, a resource granularity, and a subcarrier format included in each resource block.

Here, the transmission resource is multiple resources obtained by dividing available resources according to preset rules. The transmission resource can be understood as a subband. For example, the available resources include 200 PRBs, divided into groups of 8 PRBs, resulting in 25 subbands. Alternatively, the available resources include 200 PRBs, divided into groups of 2 PRBs, resulting in 100 subbands. The subband granularity for reporting delay-related information and phase-related information can be slightly smaller than the subband granularity for other CSI reporting.

In some embodiments, the UE reports the subband granularity so that the network device can perform subsequent processing after receiving the first phase-related information.

Taking the transmission resource as a subband for illustration, f₀ in the present disclosure may include any of the following forms:
Option 1: f₀ is a frequency value configured by higher layer parameters.
Option 2: f₀ is the center frequency value corresponding to the j-th subband, determined by higher layer parameters "absoluteFrequencyPointA" and "offsetToPointA", and a predefined formula (including subcarrier spacing or subband spacing, etc.). For example, the center frequency value of the first subband is the value configured by absoluteFrequencyPointA + the value configured by offsetToPointA + C, where the value C is the offset between the measurement resource and the center frequency for SIB transmission, and the value C is configured by higher layer signaling.
Option 3: f₀ is the center frequency value corresponding to the first subband, i.e., f₁; all subbands determine the phase (difference) based on the same center frequency, where the determination method of f₁ is the same as Option 1 and Option 2.
Option 4: f₀, i.e., the center frequency of the first subband, is directly configured by higher layer parameters, and the center frequencies of other subbands are determined by a formula, such as the center frequency fⱼ of the j-th subband (j>1) is ${f}_{j} = {f}_{1} + SCS ∗ G ∗ {N}_{RB}^{SC}$. Here f₁ is the center frequency of the first subband, SCS is the subcarrier spacing, such as 15kHz, 30kHz, etc., G is the granularity of the subband, in units of transport blocks RB or physical transport blocks PRB, e.g., one subband contains 0.5 RBs, etc., ${N}_{RB}^{SC}$ is the number of subcarriers contained in one RB.

For example, at least f₁, i.e., the center frequency of the first subband, is directly configured by higher layer parameters, and the center frequencies of other subbands are determined by a formula, such as ${f}_{j} = {f}_{1} + SCS ∗ G ∗ {N}_{RB}^{SC}$.

In the embodiment of the present disclosure, the first value is obtained from the second phase-related information mod(2*πf*₀τ, 2π). Then, the terminal subtracts the first value from the second phase-related information to obtain the third phase-related information, which ensures that the phase (difference) is small, allowing for the design of a more refined codebook to ensure accurate reporting of the phase (difference).

It should be understood that the form of the phase-related information can include various forms. Form 1: 2*πfⱼτ\,* unit is radian; Form 2: *e^{j2πfjτ};* Form 3: $\left(\begin{matrix}1 \\ {e}^{j 2 {πf}_{j} τ}\end{matrix}\right)$. The above method for determining the third phase-related information is applicable when the second phase-related information is in Form 1. When the second phase-related information is in Form 2, the terminal can obtain the third phase-related information by dividing the second phase-related information by a second value, where the second value is *e*^{*j2πf*0}*^{τ} ,* and τ is the second delay-related information, and *f*₀ is the same as *f*₀ for the first value. When the second phase-related information is in Form 3, the terminal can obtain the third phase-related information by element-wise division of the second phase-related information based on $\left(\begin{matrix}1 \\ {e}^{j 2 {πf}_{0} τ}\end{matrix}\right)$*,* and T is the second delay-related information, and *f*₀ is the same as *f*₀ for the first value.

In some embodiments, the terminal obtains the first phase-related information by quantizing the third phase-related information includes:
the terminal quantizing the third phase-related information using a quantization codebook to determine the first phase-related information.

In the embodiment of the present disclosure, the quantization codebook may be a configured or preconfigured codebook. The transmission type of the quantization codebook may be a codebook for coherent transmission or a codebook for non-coherent transmission. The present disclosure does not limit this. The present disclosure quantizes the third phase-related information using the quantization codebook, or may quantize the third phase-related information using a first quantization method to determine the first phase-related information.

For example, when the third phase-related information represents the phase (difference) in the following forms, taking the example of feeding back delay difference (first delay-related information) and phase difference (first phase-related information) corresponding to two TRPs at one time. If the UE feeds back one delay (difference) corresponding to two TRPs, denoted as τ , the phase (difference) corresponding to T can have the following forms:
Form 1: $2 {πf}_{j} τ , unit is radian ;$ Form 2: ${e}^{j 2 {πf}_{j} τ} τ ;$ Form 3: $\left(\begin{matrix}1 \\ {e}^{j 2 {πf}_{j} τ}\end{matrix}\right) .$

Here, Form 3 is in vector form, where 1 indicates that the phase (difference) between TRP 1 and TRP 1 is 0, and *e^{i2πfjτ}* indicates that the phase (difference) between TRP 2 and TRP 1 is 2*πfⱼτ.* Essentially, only Form 1 is the phase (difference). Using Form 2 and Form 3 for feedback is to reduce feedback overhead, for example, through feedback of precoding codewords from a precoding codebook (corresponding to Form 3), both the base station and the UE can determine the corresponding phase (difference) based on the precoding codeword.

The above-mentioned first quantization method: Since the delay difference and the phase difference correspond, reflecting the delay difference or phase difference between two TRPs from different dimensions, the phase difference value obtained by subtracting the frequency-domain phase corresponding to the measured delay difference from the measured frequency-domain phase difference (e.g., corresponding to (Ø*ⱼ* - mod(2πf₀τ, 2π))) will be small. One method is to have the UE feedback the phase range used for quantizing the frequency-domain phase difference, also known as the reporting range, such as range [a, b], [-a, b], or [0, b], in radians or degrees. The values a or b are positive values, configured by the network side, or predefined in the protocol, or reported by the UE to the network side. After determining the reporting range, the UE quantizes the third phase-related information according to the quantization granularity corresponding to the phase range to obtain the first phase-related information and then reports it. Another approach is to use uniform quantization for the third phase-related information, where both the reporting range and the quantization granularity are predefined by the protocol.

In some embodiments, when the third phase-related information represents the phase (difference) in Form 2 (*e*^{*j*2π*fjτ*}), the present disclosure may also quantify the third phase-related information using a quantization codebook or a second quantization method to determine the first phase-related information.

Second quantization method: Similar to the first quantization method, when the phase (difference) is in Form 2 (*e*^{*j*2}*^{πfjτ}),* the UE can report the phase difference in the exponential domain (e.g., corresponding to (e^{jØj}/ e^{j2πfjτ})or e^{j(Øj-mod(2πf0τ,2π))}). In this case, the phase range used may be [c, d] or [0, d], where the values c or d are positive values, configured by the network-side device, or predefined in the protocol, or reported by the UE to the network-side device. After determining the reporting range, the UE reports according to the quantization granularity corresponding to the reporting range. Another approach is that both the reporting range and the quantization granularity are predefined by the protocol.

In a specific implementation provided by the present disclosure, the method for determining the first phase-related information is:

When the terminal reports a piece of first delay-related information such as delay (difference) (corresponding to 2 TRPs or 2 measurement resources), and the delay (difference) is τ, assuming the first delay-related information is the second delay-related information corresponding to the second phase-related information, the reported first phase-related information such as phase (difference) is determined by subtracting the first value (the second phase-related information mod(2πf₀τ, 2π)) from the second phase-related information, i.e., the measured phase (difference), to obtain the third phase-related information, and then quantizing according to the first quantization method; or the first phase-related information such as phase (difference) is the measured value (equivalent to the value in the exponential domain) divided by e^{j2πf0τ}*τ*, and then quantized according to the first codebook.

In another specific implementation provided by the present disclosure, the method for determining the third phase-related information is:

When the terminal reports first delay-related information such as multiple delays (differences) (corresponding to multiple TRPs or measurement resources), the reported second phase-related information such as phase (difference) is obtained by subtracting the phase value corresponding to the corresponding second delay-related information such as delay (difference) (e.g., the second phase-related information mod(2πfⱼπ, 2π) ) from the measured phase (difference), and then quantizing according to the first quantization method; or the first phase-related information such as phase (difference) is obtained by dividing the measured value by the frequency-domain value corresponding to the corresponding second delay-related information such as delay (difference) (equivalent to a value in the exponential domain), and then quantizing according to the quantization codebook or the second quantization method.

Further, in optional embodiments of the present disclosure, the quantization codebook includes at least one of the following:
First codebook, the first codebook includes N-1 ***W*₁**, and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$, *i* = 0,1,2, ··· , *N* - 1;
Second codebook, the second codebook includes P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ··· , *P-*1; wherein a value of P is configured by higher layer parameters, P is less than or equal to N;
Third codebook, the third codebook includes N-1 ***W*₃**, and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$*, iₖ* = 0,1,2, ··· , *N* - 1; *k =* 1,2, ··· , *K-*1;
Fourth codebook, the fourth codebook includes *N₁ -* 1 ***W*₄,** and each of the *N₁* - 1 ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$*, i*₁ = 0,1,2, ··· , *N₁* - 1 , *··· , i*_{*K*-1} = 0,1,2, ··· *, N*_{*K*-1} - 1 ; wherein values of *Np* are configured by higher layer parameters or predefined in a protocol, p = 1,2, ··· , K - 1;
Fifth codebook, the fifth codebook includes P-1 ***W*₅**, and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ··· , *P* - 1; *k =* 1,2, ··· , *K* ; wherein a value of P is configured by higher layer parameters, P is less than or equal to N;
Sixth codebook, the sixth codebook includes P₁ - 1 ***W*₆**, and each of the P₁ - 1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ··· , P₁ - 1, ··· , *i*_{*K*-1} = 0,1,2,··· , P_{K-1} - 1; wherein values of P_{q} are configured by higher layer parameters, q = 1,2, ··· , K - 1;
   wherein N is a positive integer, and K is determined by the number of measurement objects.

It should be noted that in the embodiments of the present disclosure, when quantizing the third phase-related information using the quantization codebook, the terminal will feedback the precoding codeword in the quantization codebook to the network-side device, and both the base station and the UE can determine the corresponding phase (difference) based on the precoding codeword. The quantization codebook can also be understood as a precoding codebook.

In the embodiments of the present disclosure, when the number of measurement objects (e.g., number of TRPs, number of measurement resources, or number of measurement resource ports) is 2, the quantization codebook can be represented by the first codebook, where i in the first codebook represents the precoding codeword index. For example, when the precoding codebook contains 2 bits, the corresponding set of precoding codewords can be represented by Table 1 below:

**Table 1:**

| Codebook index | Number of layers |
|---|---|
| | 1 |
| 0 | $\frac{1}{\sqrt{2}} \left[\begin{matrix}1 \\ 1\end{matrix}\right]$ |
| 1 | $\frac{1}{\sqrt{2}} \left[\begin{matrix}1 \\ j\end{matrix}\right]$ |
| 2 | $\frac{1}{\sqrt{2}} \left[\begin{matrix}1 \\ - 1\end{matrix}\right]$ |
| 3 | $\frac{1}{\sqrt{2}} \left[\begin{matrix}1 \\ - j\end{matrix}\right]$ |

Here, Codebook index represents the codebook index; Number of layers represents the number of network layers corresponding to the precoding codeword.

Further, when the precoding codebook contains 3 bits, the corresponding set of precoding codewords can be represented by Table 2 below:

**Table 2:**

| Codebook index | Number of layers *υ* |
|---|---|
| | 1 |
| 0 | $\frac{1}{\sqrt{2}} \left[\begin{matrix}1 \\ 1\end{matrix}\right]$ |
| 1 | $\frac{1}{\sqrt{2}} \left[\begin{matrix}1 \\ j\end{matrix}\right]$ |
| 2 | $\frac{1}{\sqrt{2}} \left[\begin{matrix}1 \\ - 1\end{matrix}\right]$ |
| 3 | $\frac{1}{\sqrt{2}} \left[\begin{matrix}1 \\ - j\end{matrix}\right]$ |
| 4 | $\frac{1}{\sqrt{2}} \left[\begin{matrix}1 \\ \frac{1 + j}{\sqrt{2}}\end{matrix}\right]$ |
| 5 | $\frac{1}{\sqrt{2}} \left[\begin{matrix}1 \\ \frac{1 - j}{\sqrt{2}}\end{matrix}\right]$ |
| 6 | $\frac{1}{\sqrt{2}} \left[\begin{matrix}1 \\ \frac{- 1 + j}{\sqrt{2}}\end{matrix}\right]$ |
| 7 | $\frac{1}{\sqrt{2}} \left[\begin{matrix}1 \\ \frac{- 1 - j}{\sqrt{2}}\end{matrix}\right]$ |

In this embodiment, the number of network layers corresponding to the precoding codeword may be limited to 1, for example, for the network side to recover downlink channel information based on the precoding codeword.

In one implementation, the phase difference reported by the UE is subjected to differential operation, so only a portion of the precoding codewords may be reported. One method is to configure a subset restriction for measurement reporting for the UE, such as using N bits to configure which precoding codewords the UE can report via bit mapping; for another example, set the value of i to 0,1,2, ··· , P - 1, where the value of P is configured by higher layer parameters.

Another method is to report using the form of the second codebook described above, where the value of P in the second codebook is configured by higher layer parameters.

When the number of measurement objects (e.g., number of TRPs, number of measurement resources, or number of measurement resource ports) is 2, the quantization codebook used may be represented by the third codebook or the fourth codebook described above.

In the third codebook, the quantization method for each phase difference is the same, i.e., the distribution of phase values corresponding to the phase differences is the same; in the fourth codebook, the distribution of phase values corresponding to each phase difference may be different.

Similarly, codebook subset restriction or a new codebook can be used for phase difference reporting to reduce feedback overhead, and the form of the quantization codebook may be the fifth codebook or the sixth codebook described above.

Here, the value of P in the fifth codebook, or the values of Pₖ(k = 1,2, ..., K - 1) in the sixth codebook, are configured by higher layer parameters.

For example, when measuring reciprocity error, still taking 2 TRPs as an example, each TRP selects a reference antenna, and the UE selects a reference antenna. The UE first measures the frequency-domain channel impulse response of the equivalent channel composed of the UE reference antenna and the TRP reference antenna, assuming it is H = [h₁ h₂]. Then the UE multiplies the first codebook with H, and selects the optimal precoding matrix from the codebook based on the maximum Euclidean norm principle. If the optimal precoding matrix is $\frac{1}{\sqrt{2}} \left[\begin{matrix}1 \\ {e}^{\frac{j 2 π ∗ 3}{N}}\end{matrix}\right]$, it means the phase difference between the two TRPs is $\frac{1}{\sqrt{2}} \left[\begin{matrix}1 \\ {e}^{\frac{j 2 π ∗ 3}{N}}\end{matrix}\right]$, or $\left[\begin{matrix}1 \\ {e}^{\frac{j 2 π ∗ 3}{N}}\end{matrix}\right]$, or ${e}^{\frac{j 2 π ∗ 3}{N}}$ (corresponding to different phase difference forms). When the number of TRPs is 4, the phase difference measurement method is similar, and the UE calculates the corresponding phase difference based on the third to sixth codebooks.

In some embodiments, the terminal sending, to the network-side device, the first phase-related information corresponding to the multiple measurement objects includes:
the terminal jointly reporting the first phase-related information associated with a same first delay-related information; or,
the terminal jointly reporting the first phase-related information corresponding to a measurement resource of a same measurement object; or,
the terminal jointly reporting the first phase-related information corresponding to multiple reported first delay-related information items; or,
the terminal jointly reporting multiple first phase-related information items corresponding to a same subband; or,
the terminal jointly reporting first phase-related information items of a same type; or,
the terminal jointly reporting all determined first phase-related information.

In the embodiment of the present disclosure, the reporting format for jointly reporting the first phase-related information to the network-side device includes at least one of the following:
(1) The terminal jointly reports the first phase-related information associated with the same first delay-related information, e.g., the terminal may jointly report the phase differences corresponding to each determined delay difference.
(2) The terminal jointly reports the first phase-related information corresponding to the same measurement object, e.g., the terminal may jointly report the phase differences corresponding to the same measurement resource (or a measurement resource combination formed by combining multiple measurement resources).
(3) The terminal jointly reports the first phase-related information corresponding to multiple reported first delay-related information items, e.g., the phase differences corresponding to multiple delay differences reported by the UE may be jointly reported.
(4) The terminal jointly reports multiple first phase-related information items corresponding to the same subband, e.g., the terminal jointly reports multiple phase differences corresponding to the same subband.
(5) The terminal jointly reports first phase-related information items of the same type. For example, the first phase-related information of the same type, such as Type 1, can be jointly reported. The present disclosure can also jointly report phase differences of different types, such as Type 2 and Type 3 phase differences, where Type 2 and Type 3 are different.
(6) The terminal jointly reports all determined first phase-related information, e.g., the terminal jointly reports all phase differences.

In a specific implementation of the present disclosure, sending the first phase-related information corresponding to the multiple measurement objects to the network-side device may use the following phase difference reporting method, where the first phase-related information is illustrated as phase difference and the first delay-related information is illustrated as delay difference:
Method 1: The phase differences corresponding to each delay difference or each measurement resource (combination) can be jointly reported.

For example, the phase differences corresponding to measurement resource 1 and measurement resource 2 are φ₁, φ₂ , ··· , φ_{K}; define the minimum phase as φ_{ref,f} = min (φ₁, φ₂, *··· ,* φ_{K}). When reporting phases, the UE can report all phase values after subtracting φ_{ref.f} to reduce feedback overhead.

For another example, the phase differences corresponding to measurement resource 1 and measurement resource 2 are e^{iφ1} , e^{iφ2} , ..., e^{jφK}; define the minimum phase as φ_{ref,f} = min (e^{jφ1} , e^{jφ2} , ... , e^{jφK} ). When reporting phases, the UE can report all phase values after dividing by φ_{ref.f} to reduce feedback overhead.

For another example, the phase differences corresponding to measurement resource 1 and measurement resource 2 are $\left(\begin{matrix}1 \\ {e}^{{jφ}_{1}}\end{matrix}\right) , \left(\begin{matrix}1 \\ {e}^{{jφ}_{2}}\end{matrix}\right) , … , \left(\begin{matrix}1 \\ {e}^{{jφ}_{K}}\end{matrix}\right)$; define the minimum phase as φ_{ref,f} = min (e^{jφ1}, e^{jφ2} *,* ..., e^{jφK}). When reporting phases, the UE can report all phase values after element-wise division by $\left(\begin{matrix}1 \\ {φ}_{ref , f}\end{matrix}\right)$ to reduce feedback overhead. Alternatively, if the precoding matrix indices corresponding to $\left(\begin{matrix}1 \\ {e}^{{jφ}_{1}}\end{matrix}\right) , \left(\begin{matrix}1 \\ {e}^{{jφ}_{2}}\end{matrix}\right) , … , \left(\begin{matrix}1 \\ {e}^{{jφ}_{K}}\end{matrix}\right)$ are s, j, ..., p respectively, define the minimum phase as φ_{ref,f} = min (s, j, ... , p). When reporting phases, the UE can report all phase values after subtracting the corresponding precoding index by φ_{ref,f} to reduce feedback overhead.

Method 2: The phase differences corresponding to multiple delay differences reported by the UE can be jointly reported. For example, jointly determine the minimum phase φ_{ref,f} for all phase differences corresponding to all delay differences in one report, and report all phase differences for all delay differences after removing the influence of φ_{ref,f}.

Method 3: Multiple phase differences corresponding to one subband are jointly reported. For example, the number of measurement resources is 4, the UE determines 3 phase differences for each subband, each phase difference corresponds to 2 TRPs (or measurement resources or measurement resource ports). The UE can jointly report the 3 phase differences for each subband, i.e., jointly determine the minimum phase φ_{ref,f}, and report the 3 phase differences after removing the influence of φ_{ref,f}.

Method 4: Different types of phase differences are jointly reported. For example, the UE reports phase differences for eliminating time asynchrony and phase differences for eliminating reciprocity error. Joint reporting is performed within one type of phase difference. The UE determines the minimum phase φ_{ref,f} among all phase differences within one phase difference type, and reports all phase differences within that phase difference type after removing the influence of φ_{ref,f}.

Method 5: All phase differences are jointly reported. For example, the UE determines the minimum phase φ_{ref,f} among all phase differences, and reports all phase differences after removing the influence of φ_{ref,f}.

In some embodiments, in each of the above phase difference joint reporting methods, the UE determines the maximum phase difference in one joint report as φ_{ref,m}, and reports all phase differences after removing the influence of φ_{ref,m}.

In some embodiments, the UE reports the value of φ_{ref,f} or φ_{ref,m} to the network side; in some embodiments, the UE reports the subband index (or RB index or subcarrier index) corresponding to φ_{ref,f} or φ_{ref,m}, or the corresponding delay difference index (e.g., the index value determined by the reporting order of multiple delay differences, the index of the i-th reported delay difference is i), or the corresponding measurement resource (combination) index to the network side.

In some embodiments, the feedback granularity of the phase difference corresponding to each delay difference is different, i.e., the feedback granularity of the phase difference is determined based on the magnitude of each delay difference or the phase difference value. For example, the UE reports 3 delay differences, and the feedback granularities of the phase differences corresponding to each delay difference are K₁ RBs, K₂ RBs, and K₃ RBs. Furthermore, the feedback granularities of the phase differences corresponding to multiple delay differences can be set to be the same, for example, determining the feedback granularity based on the delay difference with the smallest feedback granularity or the corresponding phase difference, to ensure that the reporting overhead for the phase differences for each delay difference is the same.

In the embodiments of the present disclosure, after jointly reporting the delay difference and the phase difference, differential reporting can be further performed for the phase difference corresponding to each delay difference, the phase differences corresponding to all delay differences, or the phase difference corresponding to each subband.

In some embodiments, the method further includes:
the terminal determining a maximum phase value or a minimum phase value in a group of phase-related information reported jointly, and preprocessing each first phase-related information item in the group of phase-related information reported jointly based on the maximum phase value or the minimum phase value.

In the embodiment of the present disclosure, the terminal first determines the maximum phase value or the minimum phase value in a group of phase-related information reported jointly. For example, the minimum phase value is represented by φ_{ref.f}, and the maximum phase value is represented by φ_{ref,m}. Preprocessing each first phase-related information item in the group of phase-related information reported jointly may specifically include subtracting or dividing all phases within the group of phase-related information by the minimum phase value φ_{ref.f} or the maximum phase value φ_{ref,m}, and then reporting the resources to the network-side device.

In some embodiments, the method further includes:
the terminal sending, to the network-side device, at least one of the following:
a maximum phase value or a minimum phase value of each group of phase-related information;
a subband index corresponding to the maximum phase value or the minimum phase value in each group of phase-related information;
a first delay-related information index corresponding to the maximum phase value or the minimum phase value in each group of phase-related information;
a measurement resource index corresponding to the maximum phase value or the minimum phase value in each group of phase-related information.

In the embodiment of the present disclosure, the UE may report the value of φ_{ref,f} or φ_{ref,m} to the network-side device; the UE may also report the subband index (or RB index or subcarrier index) corresponding to φ_{ref,f} or φ_{ref,m}. or the corresponding delay difference index (e.g., the index value determined by the reporting order of multiple delay differences, the index of the i-th reported delay difference is i), or the corresponding measurement resource (combination) index to the network-side device.

In some embodiments, the amplitudes corresponding to the multiple measurement objects include at least one of the following:
weighting values for the first delay-related information;
weighting values for the first phase-related information;
weighting coefficients for the first delay-related information;
weighting coefficients for the first phase-related information.

In the present disclosure, the amplitude is associated with the first delay-related information or associated with the first phase-related information. In one possible implementation, the first phase-related information is determined based on the first delay-related information, and the weighting coefficient for the first delay-related information and the weighting coefficient for the first phase-related information may be coefficients with equal numerical values. When reporting delay and amplitude, the frequency-domain equivalent phase difference can be determined by the weighting coefficient for the first delay-related information, which is used for time asynchrony elimination or reciprocity error elimination. When reporting delay, phase, and amplitude, the frequency-domain equivalent phase difference can be determined by the weighting coefficient for the first delay-related information and/or the weighting coefficient for the first phase-related information, which is used for time asynchrony elimination or reciprocity error elimination.

For example, taking the first delay-related information as delay difference for illustration, and the measurement resources as TRPs for illustration. In some cases, multiple delay differences jointly determine the channel information between the TRPs and the UE. For example, the UE reports 4 delay differences, respectively representing the delay difference of the strongest path between TRP 1 and TRP 2, the delay difference between the strongest path of TRP 1 and the second strongest path of TRP 2, the delay difference between the second strongest path of TRP 1 and the strongest path of TRP 2, and the delay difference of the second strongest path between TRP 1 and TRP 2. To enable the network-side device to recover the frequency-domain channel information based on the multiple delay differences, the UE may additionally report weighting coefficients corresponding to the multiple delay differences, i.e., amplitudes.

The UE reports multiple delay differences for every two TRPs: The reporting format is one or more delays (differences) and one or more weighting values (coefficients), where the number of delays (differences) and/or the number of weighting values (also called number of weighting value coefficients, or number of strongest paths) are configured by the network-side device or reported by the UE. For example, the network-side device configures a detection threshold, and when the received signal strength exceeds the threshold, the delay difference between this path and other paths is reported, where the received signal strength of the other paths also needs to exceed a certain threshold. Alternatively, when the delay difference between two measurement resources exceeds a certain threshold, the UE reports the corresponding delay difference; when the delay difference is less than the threshold, it is not reported. Furthermore, the UE only reports delay differences corresponding to different measurement resources (i.e., delay differences between different TRPs), and does not report delay differences between different paths within the same measurement resource.

In some embodiments, the terminal sending, to the network-side device, the amplitudes corresponding to the multiple measurement objects includes:
the terminal jointly reporting amplitudes corresponding to a measurement resource of a same measurement object; or,
the terminal jointly reporting amplitudes of a same type; or,
the terminal jointly reporting amplitudes corresponding to a same first delay-related information; or,
the terminal jointly reporting amplitudes corresponding to a same first phase-related information; or,
the terminal jointly reporting amplitudes corresponding to all determined first delay-related information; or,
the terminal jointly reporting amplitudes corresponding to all determined first phase-related information; or,
the terminal reporting all the amplitudes.

In the embodiment of the present disclosure, the terminal may report the first delay-related information and the amplitude. Specifically, in the various forms of the amplitude described below, the first delay-related information includes delay difference, which is represented by 2πfⱼτ (unit radian), or represented by e^{j2πfjτ}.

In a specific implementation, the reporting format for the first delay-related information and the amplitude includes at least one of the following:
(1) Weighting value coefficients Aᵢ, where Aᵢ corresponds to the i-th delay difference. After the network-side device receives the delay differences and weighting coefficients reported by the UE, it determines the frequency-domain equivalent phase difference according to the following formula A₁(2πfⱼτ₁) + A₂(2πfⱼτ₂) + A₃(2πfⱼτ₃) + A₄(2πfⱼτ₄), which is used for time asynchrony elimination or reciprocity error elimination. Here τᵢ corresponds to the i-th delay difference, fⱼ is the frequency corresponding to the j-th subcarrier, j-th RB, or j-th subband, where the determination method for f₀ is the same as the determination method for f₀ described above.
(2) Weighting value coefficients Bᵢ, where Bᵢ corresponds to the i-th delay difference. After the network-side device receives the delay differences and weighting coefficients reported by the UE, it determines the frequency-domain equivalent phase difference according to the following formula B₁e^{j2πfjτ1} + B₂e^{j2πfjτ2} + B₃e^{j2πfjτ3} + B₄e^{j2πfjτ4}, which is used for time asynchrony elimination or reciprocity error elimination.
(3) Weighting value coefficients Cᵢ, where Cᵢ corresponds to the i-th delay difference. After the network-side device receives the delay differences and weighting coefficients reported by the UE, it determines the equivalent delay difference according to the following formula C₁τ₁ + C₂τ₂ + C₃τ₃ + C₄τ₄, which is used for time asynchrony elimination.
(4) The amplitude (i.e., D) corresponding to weighting value A₁(2πfⱼτ₁) + A₂(2πfⱼτ₂) + A₃(2πfⱼτ₃) + A₄(2πfⱼτ₄) or the weighting value B₁e^{j2πfjτ1} + B₂e^{jπfjτ2} + B₃e^{j2πfjτ3} + B₄e^{j2πfjτ4} = De^{jE}, or the weighting value C₁τ₁ + C₂τ₂ + C₃τ₃ + C₄τ₄, is calculated by the UE and reported to the network-side device.
(5) Weighting value A₁(2πfⱼτ₁) + A₂(2πfⱼτ₂) + A₃(2πfⱼτ₃) + A₄(2πfⱼτ₄) and weighting coefficients Aᵢ.
(6) The amplitude (i.e., D) corresponding to the weighting value B₁e^{i2πfjτ1} + B₂e^{jπfjτ2} + B₃e^{j2πfjτ3} + B₄e^{j2πfjτ4} = De^{jE} and weighting coefficients Bᵢ.
(7) Weighting value C₁τ₁ + C₂τ₂ + C₃τ₃ + C₄τ₄ and weighting coefficients Cᵢ.

Here, the 2πfⱼτₖ component in the weighting value needs to be modulo 2π, where *k* is the corresponding number of delays (differences), or the weighting value is modulo 2π after being obtained by the above formula.

Furthermore, when reporting delay differences and amplitudes, if only reporting delay differences and amplitudes for two TRPs, the UE also needs to further report whether the delay difference is the delay difference of measurement resource 1 relative to measurement resource 2, or the delay difference of measurement resource 2 relative to measurement resource 1, e.g., using 1 bit for indication. When the delay difference is the delay difference of measurement resource 1 relative to measurement resource 2, it means that measurement resource 2 is received first by the UE. Then, after receiving the weighting values and/or weighting coefficients reported by the UE, the network-side device determines the frequency-domain equivalent phase difference corresponding to the multiple delays, and performs pre-compensation for the downlink transmission signal corresponding to measurement resource 1, so that the signals sent by the TRPs corresponding to the two measurement resources arrive at the UE simultaneously. Alternatively, in TDD scenario, the network-side device can determine the frequency-domain equivalent phase difference based on the delay differences reported by the UE, and determine the frequency-domain channel corresponding to each RB or subband, such as H = (H₁ H₂e^{-j2πfjτ2}), and then estimate the precoding matrix for each subband. The precoding estimated in this way corresponds to the channel information in the non-synchronized scenario.

The UE reports multiple delays (differences) for multiple TRPs (each pair of measurement resources corresponds to one or more delay differences):
When the number of TRPs is greater than 2, the UE reports multiple groups of delay differences, each group of delay differences corresponds to one TRP or one measurement resource (combination). The reporting method for each group of delay differences, weighting values and/or weighting coefficients is similar to the delay difference reporting method for two TRPs. The number of weighting coefficients can be predefined in the protocol or preconfigured for the UE by the network-side device.

After receiving the report from the UE, the network-side device determines the frequency-domain equivalent phase difference corresponding to the multiple delays, and compensates the transmission signals of the TRPs so that the signals sent by the multiple TRPs arrive at the UE simultaneously; alternatively, the network-side device constructs the channel information for each RB (or subband) based on the delay differences and amplitudes, such as the channel information corresponding to 4 TRPs is H = (H₁ H₂e^{-j2πfjτ2} H₃e^{-j2πfjτ3} H₄e^{-j2πfjτ4}), and then estimates the precoding matrix for each subband. The precoding estimated in this way corresponds to the channel information in the non-synchronized scenario.

In some embodiments, when the UE reports delay differences and amplitudes to the network-side device, the reporting format of the UE may be as shown in Table 3 below:

**Table 3:**

| CSI report number | CSI fields |
|---|---|
| | Delay difference corresponding to measurement resource (combination) 1 |
| | Amplitude corresponding to measurement resource (combination) 1 |
| | Delay difference corresponding to measurement resource (combination) 2 |
| | Amplitude corresponding to measurement resource (combination) 2 |
| | ...... |
| | Delay difference corresponding to measurement resource (combination) N |
| | Amplitude corresponding to measurement resource (combination) N |

In some embodiments, the reporting format for the UE to report resources to the network-side device may also be as shown in Table 4 below, where T represents the number of delay differences.

**Table 4:**

| CSI report number | CSI fields |
|---|---|
| | Delay difference corresponding to measurement resource (combination) 1 |
| | Delay difference corresponding to measurement resource (combination) 2 |
| | ...... |
| CSI report #n | Delay difference corresponding to measurement resource (combination) N |
| | Amplitude corresponding to measurement resource (combination) 1 |
| | Amplitude corresponding to measurement resource (combination) 2 |
| | ...... |
| | Amplitude corresponding to measurement resource (combination) N |

In some embodiments, the UE may also report an indication of the measurement resource (combination).

In some embodiments, when the amplitude uses the above weighting value or weighting coefficient, the reporting format of the UE may be:
report the delay difference first, then the amplitude;
report the delay difference and amplitude corresponding to one measurement resource (combination), then report the delay difference and amplitude corresponding to other measurement resource combinations.

In another specific implementation, the reporting format for the first delay-related information, the first phase-related information, and the amplitude includes at least one of the following:
(1) Weighting value coefficients Aᵢ, where Aᵢ corresponds to the i-th delay difference. After the network side receives the delay differences and weighting coefficients reported by the UE, it determines the frequency-domain equivalent phase difference according to the following formula A₁(2πfⱼτ₁) + A₂(2πfⱼτ₂) + A₃(2πfⱼτ₃) + A₄(2πfⱼτ₄), which is used for time asynchrony elimination or reciprocity error elimination. Here τᵢ corresponds to the i-th delay difference, fⱼ is the frequency corresponding to the j-th subcarrier, j-th RB, or j-th subband, where the determination method for fⱼ is the same as the determination method for f₀ described above.
(2) Weighting value coefficients Bi, where Bᵢ corresponds to the i-th delay difference. After the network side receives the delay differences and weighting coefficients reported by the UE, it determines the frequency-domain equivalent phase difference according to the following formula B₁e^{j2πfjτ1} + B₂e^{jπfjτ2} + B₃e^{j2πfjτ3} + B₄e^{j2πfjτ4}, which is used for time asynchrony elimination or reciprocity error elimination.
(3) The amplitude (i.e., D) corresponding to the weighting value A₁(2πfⱼτ₁) + A₂(2πfⱼτ₂) + A₃(2πfⱼτ₃) + A₄(2πfⱼτ₄) or the weighting value B₁e^{j2πfjτ1} + B₂e^{jπfjτ2} + B₃e^{j2πfjτ3} + B₄e^{j2πfjτ4} = De^{jE}, is calculated by the UE and reported to the network side.
(4) Weighting value A₁(2πfⱼτ₁) + A₂(2πfⱼτ₂) + A₃(2πfⱼτ₃) + A₄(2πfⱼτ₄) and weighting coefficients Aᵢ.
(5) The amplitude (i.e., D) corresponding to the weighting value B₁e^{j2πfjτ1} + B₂e^{jπfjτ2} + B₃e^{j2πfjτ3} + B₄e^{j2πfjτ4} = De^{jE} and weighting coefficients Bᵢ.

Here, the 2πfⱼτₖ component in the weighting value needs to be modulo 2π, where k is the corresponding number of delays (differences), or the weighting value is modulo 2π after being obtained by the above formula.

In fact, the amplitude can be regarded as a combining coefficient between multiple delay differences, or a combining coefficient between multiple phase differences. Therefore, the reporting method for the amplitude corresponding to the delay difference and the amplitude corresponding to the phase difference is similar. When the UE needs to report both amplitudes (combining coefficients) corresponding to multiple delay differences and amplitudes (combining coefficients) corresponding to multiple phase differences, the amplitude corresponding to the delay difference and the amplitude corresponding to the phase difference can be quantized separately.

In some embodiments, when the amplitude uses the above weighting value or weighting coefficient, the reporting format of the UE may be:
report the delay difference and phase difference first, then the amplitude (the order of phase difference and amplitude can be reversed);
report the delay difference, phase difference, and amplitude corresponding to one measurement resource (combination), then report the delay difference, phase difference, and amplitude corresponding to other measurement resource combinations.

Correspondingly, when supporting both time asynchrony error elimination and reciprocity error elimination, the network-side device can configure the purpose of this measurement report, or at least configure the reporting purpose of the phase difference. At least one of the following methods is used for processing:
Method 1: The UE reports a set of delay differences and a set of phase differences, where the delay differences are used for time asynchrony elimination and the phase differences are used for reciprocity error elimination.
Method 2: The UE reports a set of delay differences and two sets of phase differences, where the delay differences and the first set of phase differences are used for time asynchrony elimination, and the second set of phase differences is used for reciprocity error elimination.
Method 3: The UE reports two sets of delay differences and two sets of phase differences, where the first set of delay differences and the first set of phase differences are used for time asynchrony elimination, and the second set of delay differences and the second set of phase differences are used for reciprocity error elimination; or the first set of delay differences and the first set of phase differences are used for reciprocity error elimination, and the second set of delay differences and the second set of phase differences are used for time asynchrony elimination.

In some embodiments, the method further includes:
the terminal determining a maximum amplitude in a group of amplitudes reported jointly, and preprocessing each amplitude in the group of amplitudes reported jointly based on the maximum amplitude.

In the embodiment of the present disclosure, the terminal determines the maximum amplitude in a group of amplitudes reported jointly, which can be represented by dₘₐₓ. Based on the maximum amplitude dₘₐₓ, each amplitude in the group of amplitudes reported jointly is divided by dₘₐₓ before reporting, which can minimize feedback overhead.

In some embodiments, the amplitude reported by the UE may correspond to the first delay-related information (delay difference), or may correspond to the first phase-related information (phase difference). Furthermore, the amplitude also corresponds to the measurement resource (combination).

In some embodiments, when the terminal reports amplitudes to the network-side device, any of the following methods may be adopted:
Reporting amplitudes corresponding to each measurement resource (combination) separately;
Reporting amplitudes of each type separately;
Reporting amplitudes corresponding to each delay difference separately;
Reporting amplitudes corresponding to each phase difference group separately;
Reporting amplitudes corresponding to all delay differences separately;
Reporting amplitudes corresponding to all phase differences separately.

In some embodiments, the method further includes:
the terminal sending, to the network-side device, at least one of the following:
a maximum amplitude of each group of amplitudes;
a subband index corresponding to the maximum amplitude in each group of amplitudes;
a delay difference index corresponding to the maximum amplitude in each group of amplitudes;
a measurement resource index corresponding to the maximum amplitude in each group of amplitudes.

In the present disclosure, the UE reports the value of d_{s,max} corresponding to each measurement resource (combination) to the network-side device; the UE also reports the subband index (or RB index or subcarrier index) corresponding to d_{s,max} to the network-side device.

In the embodiment of the present disclosure, when reporting amplitudes, based on different amplitude forms, the terminal may send the amplitude to the network-side device in at least one of the following forms. In the following amplitude reporting methods 1 to 7, the first delay-related information is illustrated by delay difference, and the first phase-related information is illustrated by phase difference:
Method 1: Reporting amplitudes corresponding to each measurement resource (combination) separately.

First, determine the maximum amplitude among the amplitudes corresponding to each measurement resource (combination) (e.g., d_{s,max}), where s is the index of the measurement resource (combination). The measurement resource (combination) is predefined or configured by the network-side device. All amplitudes in measurement resource (combination) s are divided by d_{s,max} and then quantized with Q bits. For example, when Q=1, 2, 3, and 4, quantization is performed according to Tables 5-8.

**Table 5:**

| Bits | Amplitudes |
|---|---|
| 0 | $\sqrt{1 / 2}$ |
| 1 | 1 |

**Table 6:**

| Bits | Amplitudes |
|---|---|
| 00 | 0 |
| 01 | $\sqrt{1 / 4}$ |
| 10 | $\sqrt{1 / 2}$ |
| 11 | 1 |

**Table 7:**

| ${k}_{l , i}^{\left(1\right)}$ | ${p}_{l , i}^{\left(1\right)}$ |
|---|---|
| 0 | 0 |
| 1 | $\sqrt{1 / 64}$ |
| 2 | $\sqrt{1 / 32}$ |
| 3 | $\sqrt{1 / 16}$ |
| 4 | $\sqrt{1 / 8}$ |
| 5 | $\sqrt{1 / 4}$ |
| 6 | $\sqrt{1 / 2}$ |
| 7 | 1 |

**Table 8:**

| Bits | Amplitudes | Bits | Amplitudes | Bits | Amplitudes | Bits | Amplitudes |
|---|---|---|---|---|---|---|---|
| 0 | Reserved | 4 | ${\left(\frac{1}{2048}\right)}^{1 / 4}$ | 8 | ${\left(\frac{1}{128}\right)}^{1 / 4}$ | 12 | ${\left(\frac{1}{8}\right)}^{1 / 4}$ |
| 1 | $\frac{1}{\sqrt{128}}$ | 5 | $\frac{1}{2 \sqrt{8}}$ | 9 | $\frac{1}{\sqrt{8}}$ | 13 | $\frac{1}{\sqrt{2}}$ |
| 2 | ${\left(\frac{1}{8192}\right)}^{1 / 4}$ | 6 | ${\left(\frac{1}{512}\right)}^{1 / 4}$ | 10 | ${\left(\frac{1}{32}\right)}^{1 / 4}$ | 14 | ${\left(\frac{1}{2}\right)}^{1 / 4}$ |
| 3 | $\frac{1}{8}$ | 7 | $\frac{1}{4}$ | 11 | $\frac{1}{2}$ | 15 | 1 |

When a measurement resource (combination) includes both amplitudes corresponding to delay differences and amplitudes corresponding to phase differences, or includes both amplitudes corresponding to time asynchrony elimination and amplitudes corresponding to reciprocity error elimination, different types of amplitudes can be reported separately, as described in Amplitude Reporting Method 2 below.

Method 2: Reporting amplitudes of each type separately.

For example, amplitudes corresponding to delay differences are reported separately, amplitudes corresponding to phase differences are reported separately, amplitudes corresponding to time asynchrony elimination are reported separately, and amplitudes corresponding to reciprocity error elimination are reported separately.

If each amplitude type corresponds to multiple measurement resources (combinations), first determine the maximum value among the amplitudes corresponding to all measurement resources (combinations) (e.g., dₘₐₓ, and then divide all amplitudes corresponding to one amplitude type by dₘₐₓ and quantize with Q bits. For example, when Q=1, 2, 3, and 4, quantization is performed according to Tables 1-4. In some embodiments, the UE reports the value of dₘₐₓ for each amplitude type to the network-side device. In some embodiments, the UE also reports the measurement resource (combination) and/or subband index (or RB index or subcarrier index) corresponding to dₘₐₓ to the network-side device.

Method 3: Reporting amplitudes corresponding to each delay difference separately.

First, determine the maximum value among the amplitudes corresponding to each delay difference (e.g., dₘₐₓ ), then divide all amplitudes corresponding to this delay difference by dₘₐₓ and quantize with Q bits. In some embodiments, the UE reports the value of dₘₐₓ to the network-side device. In some embodiments, the UE also reports the subband index (or RB index or subcarrier index) corresponding to dₘₐₓ, or the corresponding delay difference index (e.g., the index value determined by the reporting order of multiple delay differences, the index of the i-th reported delay difference is i), or the corresponding measurement resource (combination) index to the network-side device.

Method 4: Reporting amplitudes corresponding to each phase difference group separately.

A phase difference group refers to multiple phase differences corresponding to one delay difference (e.g., one phase difference per subband, all subband phase differences forming a phase difference group), or phase differences corresponding to one measurement resource (combination).

First, determine the maximum value among the amplitudes corresponding to a phase difference group (e.g., dₘₐₓ), then divide all amplitudes corresponding to this phase difference group by dₘₐₓ and quantize with Q bits. In some embodiments, the UE reports dₘₐₓ to the network-side device. In some embodiments, the UE also reports the subband index (or RB index or subcarrier index) corresponding to dₘₐₓ, or the corresponding delay difference index (e.g., the index value determined by the reporting order of multiple delay differences, the index of the i-th reported delay difference is i), or the corresponding measurement resource (combination) index to the network-side device.

Method 5: Reporting amplitudes corresponding to all delay differences separately.

First, determine the maximum value among the amplitudes corresponding to all delay differences (e.g., dₘₐₓ ), then divide all amplitudes corresponding to delay differences by dₘₐₓ and quantize with Q bits. In some embodiments, the UE reports the value of dₘₐₓ to the network-side device. In some embodiments, the UE also reports the subband index (or RB index or subcarrier index) corresponding to dₘₐₓ, or the corresponding delay difference index (e.g., the index value determined by the reporting order of multiple delay differences, the index of the i-th reported delay difference is i), or the corresponding measurement resource (combination) index to the network-side device.

Method 6: Reporting amplitudes corresponding to all phase differences separately.

First, determine the maximum value among the amplitudes corresponding to all phase differences (e.g., dₘₐₓ ), then divide all amplitudes corresponding to phase differences by dₘₐₓ and quantize with Q bits. In some embodiments, the UE reports the value of dₘₐₓ to the network-side device. In some embodiments, the UE also reports the subband index (or RB index or subcarrier index) corresponding to dₘₐₓ, or the corresponding delay difference index (e.g., the index value determined by the reporting order of multiple delay differences, the index of the i-th reported delay difference is i), or the corresponding measurement resource (combination) index to the network-side device.

Method 7: Reporting all amplitudes jointly.

First, determine the maximum value among all amplitudes (e.g., dₘₐₓ), then divide all amplitudes by dₘₐₓ and quantize with Q bits. In some embodiments, the UE reports the value of dₘₐₓ to the network-side device. In some embodiments, the UE also reports the subband index (or RB index or subcarrier index) corresponding to dₘₐₓ, or the corresponding delay difference index (e.g., the index value determined by the reporting order of multiple delay differences, the index of the i-th reported delay difference is i), or the corresponding measurement resource (combination) index to the network-side device.

It should be noted that in this embodiment, the subband index (or RB index or subcarrier index) or the corresponding delay difference index (e.g., the index value determined by the reporting order of multiple delay differences, the index of the i-th reported delay difference is i), or the corresponding measurement resource (combination) index corresponding to dₘₐₓ reported by the UE is different from the subband index or measurement resource (combination) index corresponding to the delay difference or phase difference. It is possible that in one report, both the index corresponding to dₘₐₓ (e.g., measurement resource (combination) index) and the index corresponding to the delay difference or phase difference (e.g., measurement resource (combination) index) need to be reported simultaneously.

In a specific implementation, the UE reports the first delay-related information and the first phase-related information separately to the network-side device. Here, the first delay-related information is represented as delay difference, and the first phase-related information is represented as phase difference. The UE reports the delay difference and the phase difference separately. The UE does not need to determine the phase difference based on the delay difference, but determines the delay difference and the phase difference independently. After the UE reports them to the network-side device, the network-side device can perform joint processing or precompensation based on the delay difference and phase difference reported by the UE.

The UE may report the delay difference using the following differential method or a non-differential method:

Differential method for reporting delay difference: If the UE measures and reports measurement resources corresponding to 4 TRPs, measuring a total of 3 delay differences, such as the delay difference τ₁ between measurement resource 2 and measurement resource 1, the delay difference τ₂ between measurement resource 3 and measurement resource 1, and the delay difference τ₃between measurement resource 4 and measurement resource. Assuming τ₂ is the smallest among the 3 delay differences, i.e., τ₂ = min(τ₁, τ₂, τ₃) then the UE can report τ₂, (τ₁ - τ₂), and (τ₃ - τ₂). The reporting overhead for (τ₁ - τ₂) and (τ₃ - τ₂) is lower than that for non-differential delay differences (e.g., τ₁, τ₂, τ₃), thereby reducing feedback overhead.

For example, the non-differential delay difference (e.g., τ₂) uses T₁ bits for quantization, and the differential delay differences (e.g., (τ₁ - τ₂) and (τ₃ - τ₂)) use τ₂ bits for quantization, where T₁ > T₂.

Non-differential method for reporting delay difference: Still taking the example of reporting 3 delay differences corresponding to 4 TRPs, the UE reports in ascending order or descending order of delay differences, each delay difference quantized with T₁ bits.

In some embodiments, the UE reports the measurement resource (combination) index corresponding to each delay difference (differential or non-differential).

In an optional embodiment, the terminal sending, to the network-side device, the first delay-related information corresponding to the multiple measurement objects includes:
the terminal determining reference delay-related information among multiple items of the first delay-related information;
the terminal determining differences between the multiple items of the first delay-related information and the reference delay-related information;
the terminal sending the differences and the reference delay-related information.

In the embodiment of the present disclosure, reference delay-related information is determined based on multiple items of the first delay-related information. The reference delay-related information is a reference object among the multiple items of the first delay-related information. For example, the multiple items of the first delay-related information include: TRP 1, TRP 2, TRP 3, and TRP 4, where any one of TRP 1, TRP 2, TRP 3, and TRP 4 can be used as the reference delay-related information. Further, the differences between the multiple items of the first delay-related information and the reference delay-related information are calculated. The terminal sends the differences and the reference delay-related information, and the corresponding network-side device can determine how many items of the first delay-related information exist.

In a specific embodiment, when the terminal reports multiple items of first delay-related information and multiple items of first phase-related information, the first delay-related information is illustrated by delay difference, and the first phase-related information is illustrated by phase difference. Here, the multiple delay differences correspond to multiple measurement resources or measurement resource ports, and the multiple phase differences also correspond to multiple measurement resources or measurement resource ports.

For example, in one measurement report, the number of TRPs is 4, namely TRP 1, TRP 2, TRP 3, and TRP 4. The number of measurement resources or measurement resource ports is 4. The UE determines 3 delay differences based on these measurement resources or measurement resource ports, respectively representing the delay differences of TRP 2-TRP 4 relative to TRP 1, i.e., the delay difference between measurement resource 2 and measurement resource 1, the delay difference between measurement resource 3 and measurement resource 1, and the delay difference between measurement resource 4 and measurement resource 1. For another example, the UE reports multiple groups of delay differences, such as taking measurement resource 1 as the reference, the delay differences of other measurement resources relative to measurement resource 1; taking measurement resource 2 as the reference, the delay differences of other measurement resources relative to measurement resource 2; taking measurement resource 3 as the reference, the delay differences of other measurement resources relative to measurement resource 3; taking measurement resource 4 as the reference, the delay differences of other measurement resources relative to measurement resource 4. In this case, the UE reports a total of 12 delay differences, respectively representing:
Delay difference between measurement resource 2 and measurement resource 1, delay difference between measurement resource 3 and measurement resource 1, delay difference between measurement resource 4 and measurement resource 1;
Delay difference between measurement resource 1 and measurement resource 2, delay difference between measurement resource 3 and measurement resource 2, delay difference between measurement resource 4 and measurement resource 2;
Delay difference between measurement resource 1 and measurement resource 3, delay difference between measurement resource 2 and measurement resource 3, delay difference between measurement resource 4 and measurement resource 3;
Delay difference between measurement resource 1 and measurement resource 4, delay difference between measurement resource 2 and measurement resource 4, delay difference between measurement resource 3 and measurement resource 4.

In some embodiments, the terminal sending, to the network-side device, the first delay-related information corresponding to the multiple measurement objects includes:
the terminal sequentially reporting multiple items of the first delay-related information based on a preset sorting strategy.

In the embodiment of the present disclosure, since multiple delay differences are reported, it is necessary to determine the correspondence between the delay differences and the measurement resources or measurement resource ports. The preset sorting strategy may be in ascending order or descending order of delay differences. For example, the UE reports in ascending order or descending order of delay differences, and indicates the (absolute or relative) index of the measurement resource or the (absolute or relative) index of the measurement resource port corresponding to the delay difference. Because one delay difference is associated with multiple measurement resources or multiple measurement resource ports, the measurement resource combination or measurement resource port combination corresponding to the delay difference can also be determined by permutation and combination or a predefined method.

For example, a measurement resource set contains 4 measurement resources. The number of permutations of the 4 measurement resources is 4*3*2*1=24, where (measurement resource 1, measurement resource 2, measurement resource 4, measurement resource 3) is a different combination from (measurement resource 2, measurement resource 1, measurement resource 4, measurement resource 3), because it affects the correspondence between the reported delay differences and the measurement resources. In this case, the UE can use 5 bits to report which of the 24 combinations the delay difference corresponds to. Alternatively, it can be predefined that the combination reported by the UE is a smaller set, such as combinations with resources 1, 2, 3, 4 as reference resources respectively, e.g., (measurement resource 1, measurement resource 2, measurement resource 3, measurement resource 4), (measurement resource 2, measurement resource 1, measurement resource 3, measurement resource 4), (measurement resource 3, measurement resource 1, measurement resource 2, measurement resource 4), (measurement resource 4, measurement resource 1, measurement resource 2, measurement resource 3). In this way, only 2 bits are needed to report the measurement resource combination corresponding to the delay difference. The allowed measurement resource combinations for reporting can also be explicitly configured by the network-side device.

In some embodiments, in the case of using 2 or more measurement resources, each measurement resource corresponding to one or more items of first delay-related information or first phase-related information, taking the measurement resource as TRP, the first delay-related information as delay difference, and the first phase-related information as phase difference as an example, the steps for jointly reporting the delay difference and the phase difference are further described.

For example, in one report, both delay difference and phase difference are reported, where the phase difference may be the residual phase difference after removing the influence of the delay difference. Taking the example of feeding back delay difference and phase difference corresponding to two TRPs at one time, if the UE feeds back one delay (difference) corresponding to two TRPs, denoted as τ, the phase (difference) corresponding to T can have the following forms:
Form 1: 2πfⱼτ, unit is radian;
Form 2: ${e}^{j 2 {πf}_{j} τ} ;$ Form 3: $\left(\begin{matrix}1 \\ {e}^{j 2 {πf}_{j} τ}\end{matrix}\right) .$

Here, Form 3 is in vector form, where 1 indicates that the phase (difference) between TRP 1 and TRP 1 is 0, and e^{j2πfjτ} indicates that the phase (difference) between TRP 2 and TRP 1 is 2πfⱼτ. Essentially, only Form 1 is the phase (difference). Using Form 2 and Form 3 for feedback is to reduce feedback overhead, for example, through feedback of precoding codewords from a precoding codebook (corresponding to Form 3), both the base station and the UE can determine the corresponding phase (difference) based on the precoding codeword.

If the UE measures the phase difference of two TRPs in the frequency domain, such as Øⱼ, e^{jØj} or $\left(\begin{matrix}1 \\ {e}^{j {∅}_{j}}\end{matrix}\right)$, it can further subtract the influence of the phase difference corresponding to the delay (e.g., 2πfⱼτ, e^{j2πfjτ}or $\left(\begin{matrix}1 \\ {e}^{j 2 {πf}_{j} τ}\end{matrix}\right)$ to further reduce feedback overhead by reducing the value of the phase difference.

In the present disclosure, in the case of reporting one delay difference and multiple phase differences, the delay difference is the delay difference between two TRPs or two measurement resources, and the phase differences are the phase differences for each subband, PRB, or PRB group in the frequency domain.

In this embodiment, the subband granularity for phase difference reporting is B PRBs, where B is reported by the UE to the network-side device. It should be noted that the subband granularity for phase difference reporting may be the same as or different from the PMI reporting granularity defined in the 5G NR protocol. The subband granularity needs to match the variation of the phase difference, ensuring that the phase difference reported within one subband is applicable to the entire subband. In the present disclosure, the UE measures the phase difference and reports the reporting granularity of the phase difference. The subband granularity for reporting the phase difference (also called first subband granularity) can be 0.5 PRB, 1 PRB, 2 PRBs, 3 PRBs, 4 PRBs, ..., 32 PRBs, ..., 64 PRBs, etc.

When the delay difference is τ, the reported phase difference is the measured phase difference minus mod(2πf₀τ, 2π) (e.g., for phase difference Form 1, quantized according to the first quantization method; or the phase difference is the measured value divided by e^{j2πfjτ} (e.g., for phase difference Form 2 or Form 3), and then quantized according to the second quantization method or quantization codebook). Since the measured phase (difference) is usually between [0, 2π], when calculating the differential phase difference, the value of 2πfⱼτ also needs to be transformed to be within [0, 2π]. For e^{j2πfjτ} and the corresponding measured phase (difference), there is no requirement for the phase, and it is not necessary to transform the phase to be within [0, 2π].

In some embodiments, when reporting multiple delay differences and multiple phase differences, where each delay difference corresponds to one or more phase differences in the resource report from the terminal to the network-side device, the reporting format of the UE may be as shown in Table 9 below:

**Table 9:**

| CSI report number | CSI fields |
|---|---|
| | Measurement resource (combination) indication |
| CSI report #n | (Wideband) delay difference |
| | Subband phase difference |
| | ...... |

The reporting format for the UE to report resources to the network-side device may also be as shown in Table 10 below, where T represents the number of delay differences.

**Table 10:**

| CSI report number | CSI fields |
|---|---|
| | Measurement resource (combination) indication |
| | Delay difference 1 (corresponding to the first measurement resource combination or the first measurement resource and the reference resource) |
| | Subband phase difference corresponding to delay difference 1 |
| CSI report #n | Delay difference 2 (corresponding to the second measurement resource combination or the second measurement resource and the reference resource) |
| | Subband phase difference corresponding to delay difference 2 |
| | ...... |
| | Delay difference T (corresponding to the T-th measurement resource combination or the T-th measurement resource and the reference resource) |
| | Subband phase difference corresponding to delay difference T |
| | ...... |

The phase difference reported in the present disclosure is obtained by subtracting the phase value corresponding to the corresponding delay difference from the measured phase difference, and then quantizing according to the first quantization method, or the phase difference is obtained by dividing the measured value by the frequency-domain value corresponding to the corresponding delay difference (equivalent to a value in the exponential domain), and then quantizing according to the second quantization method or quantization codebook.

In some embodiments, the method of the present disclosure further includes:
when sending the first phase-related information to the network-side device, the terminal sending information of a phase range used for quantization;
when sending the first delay-related information to the network-side device, the terminal sending information of a time range used for quantization.

In the embodiment of the present disclosure, when the network-side device performs calculations using the quantization codebook, whether using the first quantization method or the second quantization method described above, it requires the information of the phase range used for quantization or the information of the time range used for quantization. When sending the first phase-related information or the first delay-related information, sending the phase range and time range helps reduce the time for subsequent quantization processing.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
the terminal reporting the information of the phase range or the information of the time range used for quantization includes:
the terminal sending at least one of a, b, and w.

In the embodiment of the present disclosure, the terminal sends at least one of a, b, and w, which allows the UE to feedback the reporting range of the frequency-domain phase difference, such as the range [a, b], [-a, b], or [0, b], in radians or degrees. The values a or b are positive values, configured by the network-side device, or predefined in the protocol, or reported by the UE to the network side. After determining the reporting range, the UE reports according to the quantization granularity corresponding to the reporting range. Alternatively, uniform quantization is used for the phase difference, where both the reporting range and the reporting granularity are predefined by the protocol. The purpose of setting the phase range or time range as described above is to achieve higher precision reporting with lower signaling overhead.

In summary, the measurement reporting method on the terminal side according to the embodiments of the present disclosure is used for reporting at least two of delay difference, phase difference, and amplitude between multiple measurement objects. Through this method, time differences, phase differences, or reciprocity errors between multiple measurement objects can be accurately eliminated.

Referring to FIG. 2, an embodiment of the present disclosure further provides a measurement reporting method, including:
Step 21: A terminal determines multiple measurement objects.

In the present disclosure, the measurement object may be a measurement resource or a measurement resource port. For example, one measurement resource includes multiple measurement resource ports, and the multiple measurement objects may be multiple measurement resource ports of one measurement resource, or the multiple measurement objects may be multiple measurement resources or multiple resource ports respectively corresponding to multiple measurement resources, or the multiple measurement objects may be multiple measurement resource sets. For another example, one measurement resource port corresponds to one TRP, and multiple measurement objects may represent multiple TRPs. The present disclosure does not limit this.

Step 22: The terminal sends, to a network-side device, first delay-related information or first phase-related information corresponding to the multiple measurement objects.

Step 23: When sending the first phase-related information to the network-side device, the terminal sends information of a phase range used for quantization.

Step 24: When sending the first delay-related information to the network-side device, the terminal sends information of a time range used for quantization.

In the embodiment of the present disclosure, different from the terminal-side implementation method described above, in step 22, the terminal sends the first delay-related information or the first phase-related information to the network-side device. Based on the first delay-related information or the first phase-related information, it is beneficial to reduce feedback overhead. Since the network-side device requires the information of the phase range used for quantization or the information of the time range used for quantization when performing calculations using the quantization codebook, whether using the first quantization method or the second quantization method described above, sending the phase range and time range when sending the first phase-related information or the first delay-related information helps reduce the time for subsequent quantization processing.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
the terminal reporting the information of the phase range or the information of the time range used for quantization includes:
the terminal sending at least one of a, b, and w.

In some embodiments, quantization granularities or numbers of quantization values are different for different phase ranges or different time ranges, wherein quantization granularity values or numbers of quantization values corresponding to the phase ranges or the time ranges are predefined by a protocol.

In the embodiment of the present disclosure, the terminal sends at least one of a, b, and w, which allows the UE to feedback the reporting range of the frequency-domain phase difference, such as the range [a, b], [-a, b], or [0, b], in radians or degrees. The values a or b are positive values, configured by the network-side device, or predefined in the protocol, or reported by the UE to the network side. After determining the reporting range, the UE reports according to the quantization granularity corresponding to the reporting range. Alternatively, uniform quantization is used for the phase difference, where both the reporting range and the reporting granularity are predefined by the protocol. The purpose of setting the phase range or time range as described above is to achieve higher precision reporting with lower signaling overhead.

In some embodiments, the first phase-related information is determined based on at least one of the following codebooks:
First codebook, the first codebook includes N-1 ***W***₁*,* and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$, *i* = 0,1,2,···, *N -* 1;
Second codebook, the second codebook includes P-1 ***W*₂**, and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ···, *P* - 1; wherein a value of P is configured by higher layer parameters, P is less than or equal to N;
Third codebook, the third codebook includes N-1 ***W***₃, and each of the N-1 ***W***₃ is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$*, iₖ* = 0,1,2,···, *N - 1; k =* 1,2,···, *K-*1;
Fourth codebook, the fourth codebook includes *N*₁ *-* 1 ***W***₄, and each of the *N*₁ - 1 ***W***₄ is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2,···, *N*₁ - 1 , ···, *i*_{*K*-1} = 0,1,2,···, *N*_{*K*-1} *-* 1; wherein values of *Np* are configured by higher layer parameters or predefined in a protocol, p = 1,2,···, K - 1;
Fifth codebook, the fifth codebook includes P-1 ***W***₅, and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *P* - 1; *k =* 1,2,···, *K* ; wherein a value of P is configured by higher layer parameters, P is less than or equal to N;
Sixth codebook, the sixth codebook includes P₁ - 1 ***W***₆, and each of the P₁ - 1 ***W***₆ is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2,···, P₁ - 1, ···, i_{K-1} = 0,1,2,···, P_{K-1} - 1; wherein values of P_{q} are configured by higher layer parameters, q = 1,2,···, K - 1;
   wherein N is a positive integer, and K is determined by the number of measurement objects.

In the embodiment of the present disclosure, when the number of measurement objects (e.g., number of TRPs, number of measurement resources, or number of measurement resource ports) is 2, the quantization codebook can be represented by the first codebook, where i in the first codebook represents the precoding codeword index. In this embodiment, the number of network layers corresponding to the precoding codeword may be limited to 1, for example, for the network side to recover downlink channel information based on the precoding codeword.

In one implementation, the phase difference reported by the UE is subjected to differential operation, so only a portion of the precoding codewords may be reported. One method is to configure a subset restriction for measurement reporting for the UE, such as using N bits to configure which precoding codewords the UE can report via bit mapping; for another example, set the value of i to 0, 1, 2, ···, P-1, where the value of P is configured by higher layer parameters.

Another method is to report using the form of the second codebook described above, where the value of P in the second codebook is configured by higher layer parameters. When the number of measurement objects (e.g., number of TRPs, number of measurement resources, or number of measurement resource ports) is 2, the quantization codebook used may be represented by the third codebook or the fourth codebook described above. In the third codebook, the quantization method for each phase difference is the same, i.e., the distribution of phase values corresponding to the phase differences is the same; in the fourth codebook, the distribution of phase values corresponding to each phase difference may be different.

Similarly, codebook subset restriction or a new codebook can be used for phase difference reporting to reduce feedback overhead, and the form of the quantization codebook may be the fifth codebook or the sixth codebook described above. Here, the value of P in the fifth codebook, or the values of Pₖ(k = 1,2, ..., K - 1) in the sixth codebook, are configured by higher layer parameters.

In some embodiments, the terminal sending, to the network-side device, the first phase-related information corresponding to the multiple measurement objects includes:
the terminal jointly reporting the first phase-related information associated with a same delay-related information; or,
the terminal jointly reporting the first phase-related information corresponding to a measurement resource of a same measurement object; or,
the terminal jointly reporting multiple first phase-related information items corresponding to a same subband; or,
the terminal jointly reporting first phase-related information items of a same type; or,
the terminal jointly reporting all determined first phase-related information.

In the embodiment of the present disclosure, the reporting format for jointly reporting the first phase-related information to the network-side device includes at least one of the following:
(1) The terminal jointly reports the first phase-related information associated with the same first delay-related information, e.g., the terminal may jointly report the phase differences corresponding to each determined delay difference.
(2) The terminal jointly reports the first phase-related information corresponding to the same measurement object, e.g., the terminal may jointly report the phase differences corresponding to the same measurement resource (or a measurement resource combination formed by combining multiple measurement resources).
(3) The terminal jointly reports the first phase-related information corresponding to multiple reported first delay-related information items, e.g., the phase differences corresponding to multiple delay differences reported by the UE may be jointly reported.
(4) The terminal jointly reports multiple first phase-related information items corresponding to the same subband, e.g., the terminal jointly reports multiple phase differences corresponding to the same subband.
(5) The terminal jointly reports first phase-related information items of the same type. For example, the first phase-related information of the same type, such as Type 1, can be jointly reported. The present disclosure can also jointly report phase differences of different types, such as Type 2 and Type 3 phase differences, where Type 2 and Type 3 are different.
(6) The terminal jointly reports all determined first phase-related information, e.g., the terminal jointly reports all phase differences.

It should be noted that the embodiments of the measurement reporting method on the terminal side corresponding to FIG. 1 are also applicable to the method of the present disclosure and will not be described again here.

In summary, the measurement reporting method on the terminal side according to the embodiments of the present disclosure is used for reporting delay difference or phase difference between multiple measurement objects. Through this method, the amount of data calculation can be reduced, and the overhead on the terminal side can be reduced.

Referring to FIG. 3, an embodiment of the present disclosure further provides a measurement obtaining method, including:
Step 31: A network-side device receives first delay-related information and first phase-related information sent by a terminal corresponding to multiple measurement objects; wherein the first delay-related information is associated with the first phase-related information.

In the present disclosure, the network-side device may configure multiple measurement resources for the UE. The measurement resources may be CSI-RS resources, or SSB resources, TRS resources, etc. The multiple measurement resources may be configured in one measurement resource set (e.g., CSI-RS resource set) or in multiple measurement resource sets. The present disclosure does not limit this. One measurement resource, or multiple measurement resources in one measurement resource set, corresponds to one TRP.

In the embodiment of the present disclosure, the network-side device receives the first delay-related information corresponding to the multiple measurement objects sent by the terminal, and receives the first phase-related information associated with the first delay-related information. The first delay-related information may be a measured delay or a delay obtained after measurement and processing. The first phase-related information may be calculated from the measured phase and the corresponding measured delay. By simultaneously receiving associated delay and phase, the present disclosure performs preprocessing at the network-side device to eliminate the delay difference or phase difference between multiple measurement objects, reducing feedback overhead.

In some embodiments, in the embodiments of the present disclosure, the first delay-related information and the first phase-related information may be independent of each other. For example, the first delay-related information and the first phase-related information may be measured separately, or measured separately and then reported after processing, or the first delay-related information and the first phase-related information may be reported in one report, but the first delay-related information and the first phase-related information are quantized independently. It should be noted that although the two can be reported independently, they are correlated, i.e., the first delay-related information is associated with the first phase-related information. For example, the first delay-related information and the first phase-related information are reported separately: the first delay-related information (delay difference) is reported using a differential or non-differential method.

In some embodiments, the network-side device receives amplitudes sent by the terminal corresponding to the multiple measurement objects.

In the embodiment of the present disclosure, while receiving the first delay-related information and the first phase-related information, the amplitudes corresponding to the multiple measurement objects are also received. The amplitudes may be amplitudes corresponding to multiple items of the first delay-related information, or amplitudes corresponding to multiple items of the first phase-related information. The present disclosure simultaneously receives at least one of the first delay-related information, the first phase-related information, the amplitude corresponding to the first delay-related information, and the amplitude corresponding to the first phase-related information. Through this method, time differences, phase differences, or reciprocity errors between multiple TRPs can be accurately eliminated.

In some embodiments, when the network-side device receives the measurement report from the terminal, it may receive at least two of the first delay-related information, the first phase-related information, and the amplitude between multiple measurement objects. For example, the present disclosure may receive the joint report of the first delay-related information and the first phase-related information; or may separately receive the measurement report information of the first delay-related information and the amplitude, etc.

In some embodiments, the first phase-related information is determined based on a quantization codebook;
the quantization codebook includes at least one of the following:
First codebook, the first codebook includes N-1 ***W***₁*,* and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$, *i* = 0,1,2,···, *N* - 1;
Second codebook, the second codebook includes P-1 ***W*₂**, and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2,···, *P-*1; wherein a value of P is configured by higher layer parameters, P is less than or equal to N;
Third codebook, the third codebook includes N-1 ***W***₃, and each of the N-1 ***W***₃ is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *N - 1; k =* 1,2,···, *K-*1;
Fourth codebook, the fourth codebook includes *N*₁ *-* 1 ***W***₄, and each of the *N*₁ - 1 ***W***₄ is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$*, i*₁ = 0,1,2,···, *N*₁ - 1 , ···, *i*_{*K*-1} = 0,1,2, ···, *N*_{*K*-1} *-* 1; wherein values of *Np* are configured by higher layer parameters or predefined in a protocol, p = 1,2,···, K - 1;
Fifth codebook, the fifth codebook includes P-1 ***W*₅,** and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$*, iₖ* = 0,1,2,···, *P* - 1; *k =* 1,2,···, *K* ; wherein a value of P is configured by higher layer parameters, P is less than or equal to N;
Sixth codebook, the sixth codebook includes P₁ - 1 ***W***₆, and each of the P₁ - 1 ***W***₆ is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2,···, P₁ - 1, ···, i_{K-1} = 0,1,2,···, P_{K-1} - 1; wherein values of P_{q} are configured by higher layer parameters, q = 1,2,···, K - 1;
   wherein N is a positive integer, and K is determined by the number of measurement objects.

In the embodiment of the present disclosure, when the number of measurement objects (e.g., number of TRPs, number of measurement resources, or number of measurement resource ports) is 2, the quantization codebook can be represented by the first codebook, where i in the first codebook represents the precoding codeword index. In this embodiment, the number of network layers corresponding to the precoding codeword may be limited to 1, for example, for the network side to recover downlink channel information based on the precoding codeword.

In one implementation, the phase difference reported by the UE is subjected to differential operation, so only a portion of the precoding codewords may be reported. One method is to configure a subset restriction for measurement reporting for the UE, such as using N bits to configure which precoding codewords the UE can report via bit mapping; for another example, set the value of i to 0,1,2,···,P-1, where the value of P is configured by higher layer parameters. Another method is to report using the form of the second codebook described above, where the value of P in the second codebook is configured by higher layer parameters. When the number of measurement objects (e.g., number of TRPs, number of measurement resources, or number of measurement resource ports) is 2, the quantization codebook used may be represented by the third codebook or the fourth codebook described above. In the third codebook, the quantization method for each phase difference is the same, i.e., the distribution of phase values corresponding to the phase differences is the same; in the fourth codebook, the distribution of phase values corresponding to each phase difference may be different.

Similarly, codebook subset restriction or a new codebook can be used for phase difference reporting to reduce feedback overhead, and the form of the quantization codebook may be the fifth codebook or the sixth codebook described above. Here, the value of P in the fifth codebook, or the values of Pₖ(k = 1,2, ..., K - 1) in the sixth codebook, are configured by higher layer parameters.

In some embodiments, the method further includes:
the network-side device receiving at least one of the following sent by the terminal:
a maximum phase value or a minimum phase value of each group of phase-related information;
a subband index corresponding to the maximum phase value or the minimum phase value in each group of phase-related information;
a delay-related information index corresponding to the maximum phase value or the minimum phase value in each group of phase-related information;
a measurement resource index corresponding to the maximum phase value or the minimum phase value in each group of phase-related information.

In the embodiment of the present disclosure, the network-side device receives the value of φ_{ref,f} or φ_{ref,m} reported by the UE, where the minimum phase value φ_{ref.f} is the minimum phase value in a group of phase-related information determined jointly by the terminal, and the maximum phase value φ_{ref.f} is the maximum phase value in a group of phase-related information determined jointly by the terminal. The network-side device may also receive the subband index (or RB index or subcarrier index) corresponding to φ_{ref.f} or φ_{ref,m} reported by the UE, or the corresponding delay difference index (e.g., the index value determined by the reporting order of multiple delay differences, the index of the i-th reported delay difference is i), or the corresponding measurement resource (combination) index.

In some embodiments, the amplitudes corresponding to the multiple measurement objects include at least one of the following:
weighting values for the first delay-related information;
weighting values for the first phase-related information;
weighting coefficients for the first delay-related information;
weighting coefficients for the first phase-related information.

In some embodiments, the network-side device receives at least one of the following sent by the terminal:
a maximum amplitude of each group of amplitudes;
a subband index corresponding to the maximum amplitude in each group of amplitudes;
a delay difference index corresponding to the maximum amplitude in each group of amplitudes;
a measurement resource index corresponding to the maximum amplitude in each group of amplitudes.

In some embodiments, the first delay-related information corresponding to the multiple measurement objects includes:
reference delay-related information and differences corresponding to the reference delay-related information.

In the present disclosure, the network-side device receives the value of d_{s,max} corresponding to each measurement resource (combination) from the UE; it also receives the subband index (or RB index or subcarrier index) corresponding to d_{s,max} from the UE.

Specifically, it may include at least one of the following: receiving the UE reporting amplitudes corresponding to each measurement resource (combination) separately; receiving the UE reporting amplitudes of each type separately; receiving the UE reporting amplitudes corresponding to each delay difference separately; receiving the UE reporting amplitudes corresponding to each phase difference group separately; receiving the UE reporting amplitudes corresponding to all delay differences separately; receiving the UE reporting amplitudes corresponding to all phase differences separately; receiving the UE reporting all amplitudes jointly.

It should be noted that in this embodiment, the subband index (or RB index or subcarrier index) or the corresponding delay difference index (e.g., the index value determined by the reporting order of multiple delay differences, the index of the i-th reported delay difference is i), or the corresponding measurement resource (combination) index corresponding to dₘₐₓ reported by the UE is different from the subband index or measurement resource (combination) index corresponding to the delay difference or phase difference. It is possible that in one report, both the index corresponding to dₘₐₓ (e.g., measurement resource (combination) index) and the index corresponding to the delay difference or phase difference (e.g., measurement resource (combination) index) need to be reported simultaneously.

In some embodiments, the method further includes:
the network-side device receiving at least one of the following used for quantization sent by the terminal:
information of a phase range;
information of a time range.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
the network-side device receiving the information of the phase range or the information of the time range used for quantization sent by the terminal includes:
the network-side device receiving at least one of a, b, and w reported by the terminal.

In the embodiment of the present disclosure, the network-side device receives at least one of a, b, and w sent by the terminal, which allows the UE to feedback the reporting range of the frequency-domain phase difference, such as the range [a, b], [-a, b], or [0, b], in radians or degrees. The values a or b are positive values, configured by the network-side device, or predefined in the protocol, or reported by the UE to the network-side device. After determining the reporting range, the network-side device receives the report from the UE according to the quantization granularity corresponding to the reporting range. Alternatively, uniform quantization is used for the phase difference, where both the reporting range and the reporting granularity are predefined by the protocol. The purpose of setting the phase range or time range as described above is to achieve higher precision reporting with lower signaling overhead.

It should be noted that the embodiments of the measurement reporting method on the terminal side corresponding to Figs. 1 and 2 are also applicable to the method of the present disclosure and will not be described again here.

In summary, the measurement obtaining method at the network-side device according to the present disclosure is used for obtaining at least two of delay difference, phase difference, and amplitude between multiple measurement objects. Through this method, time differences, phase differences, or reciprocity errors between multiple measurement objects can be accurately eliminated.

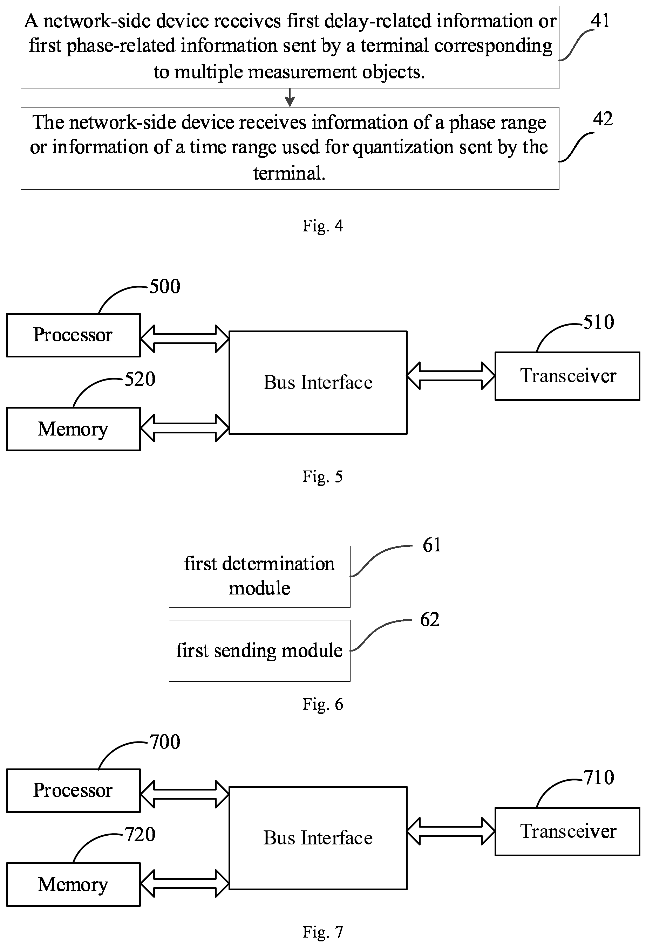

Referring to FIG. 4, an embodiment of the present disclosure further provides a measurement obtaining method, including:
Step 41: A network-side device receives first delay-related information or first phase-related information sent by a terminal corresponding to multiple measurement objects.
Step 42: The network-side device receives information of a phase range or information of a time range used for quantization sent by the terminal.

In the embodiment of the present disclosure, the network-side device receives the first delay-related information or the first phase-related information sent by the terminal, and receives the information of the phase range used for quantization or the information of the time range used for quantization. The present disclosure, based on the first delay-related information or the first phase-related information and the corresponding information of the phase range used for quantization or the information of the time range used for quantization, helps reduce the time for subsequent quantization processing and can reduce feedback overhead.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
the network-side device receiving the information of the phase range or the information of the time range used for quantization sent by the terminal includes:
the network-side device receiving at least one of a, b, and w reported by the terminal.

In some embodiments, quantization granularities or numbers of quantization values are different for different phase ranges or different time ranges, wherein quantization granularity values or numbers of quantization values corresponding to the phase ranges or the time ranges are predefined by a protocol.

In the embodiment of the present disclosure, the network-side device receives at least one of a, b, and w sent by the terminal, which allows the UE to feedback the reporting range of the frequency-domain phase difference, such as the range [a, b], [-a, b], or [0, b], in radians or degrees. The values a or b are positive values, configured by the network-side device, or predefined in the protocol, or reported by the UE to the network-side device. After determining the reporting range, the network-side device receives the report from the UE according to the quantization granularity corresponding to the reporting range. Alternatively, uniform quantization is used for the phase difference, where both the reporting range and the reporting granularity are predefined by the protocol. The purpose of setting the phase range or time range as described above is to achieve higher precision reporting with lower signaling overhead.

In some embodiments, the phase-related information is determined based on at least one of the following codebooks:
First codebook, the first codebook includes N-1 ***W***₁*,* and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$, *i* = 0,1,2, ···, *N* - 1;
Second codebook, the second codebook includes P-1 ***W*₂**, and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ···, *P-*1; wherein a value of P is configured by higher layer parameters, P is less than or equal to N;
Third codebook, the third codebook includes N-1 ***W***₃, and each of the N-1 ***W***₃ is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$*, iₖ* = 0,1,2,···, *N* - 1; *k =* 1,2,···, *K-*1;
Fourth codebook, the fourth codebook includes *N*₁ *-* 1 ***W***₄, and each of the *N*₁ - 1 ***W***₄ is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2,···, *N*₁ - 1 , ···, *i*_{*K*-1} = 0,1,2,···, *N*_{*K*-1} *-* 1; wherein values of *Np* are configured by higher layer parameters or predefined in a protocol, p = 1,2,···, K - 1;
Fifth codebook, the fifth codebook includes P-1 ***W***₅, and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, i*ₖ* = 0,1,2,···, *P* - 1; *k =* 1,2,···, *K* ; wherein a value of P is configured by higher layer parameters, P is less than or equal to N;
Sixth codebook, the sixth codebook includes P₁ - 1 ***W***₆, and each of the P₁ - 1 ***W***₆ is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2,···, P₁ - 1, ···, i_{K-1} = 0,1,2,···, P_{K-1} - 1; wherein values of P_{q} are configured by higher layer parameters, q = 1,2,···, K - 1;
   wherein N is a positive integer, and K is determined by the number of measurement objects.

In the embodiment of the present disclosure, when the number of measurement objects (e.g., number of TRPs, number of measurement resources, or number of measurement resource ports) is 2, the quantization codebook can be represented by the first codebook, where i in the first codebook represents the precoding codeword index. In this embodiment, the number of network layers corresponding to the precoding codeword may be limited to 1, for example, for the network side to recover downlink channel information based on the precoding codeword.

In one implementation, the phase difference reported by the UE is subjected to differential operation, so only a portion of the precoding codewords may be reported. One method is to configure a subset restriction for measurement reporting for the UE, such as using N bits to configure which precoding codewords the UE can report via bit mapping; for another example, set the value of i to 0,1,2,···,P-1, where the value of P is configured by higher layer parameters. Another method is to report using the form of the second codebook described above, where the value of P in the second codebook is configured by higher layer parameters. When the number of measurement objects (e.g., number of TRPs, number of measurement resources, or number of measurement resource ports) is 2, the quantization codebook used may be represented by the third codebook or the fourth codebook described above. In the third codebook, the quantization method for each phase difference is the same, i.e., the distribution of phase values corresponding to the phase differences is the same; in the fourth codebook, the distribution of phase values corresponding to each phase difference may be different.

Similarly, codebook subset restriction or a new codebook can be used for phase difference reporting to reduce feedback overhead, and the form of the quantization codebook may be the fifth codebook or the sixth codebook described above. Here, the value of P in the fifth codebook, or the values of Pₖ(k = 1,2, ..., K - 1) in the sixth codebook, are configured by higher layer parameters.

It should be noted that the embodiments of the measurement reporting method on the terminal side corresponding to Figs. 1 and 2 are also applicable to the method of the present disclosure and will not be described again here.

In summary, the measurement obtaining method at the network-side device in the embodiments of the present disclosure is used for obtaining delay difference or phase difference between multiple measurement objects. Through this method, the amount of data calculation can be reduced, and the overhead on the terminal side can be reduced.

Specifically, as shown in FIG. 5, an embodiment of the present disclosure provides a measurement reporting apparatus, including: a memory 520, a transceiver 500, and a processor 510;
the memory 520 is configured to store program instructions; the transceiver 500 is configured to send and receive data under the control of the processor 510; the processor 510 is configured to read the program instructions in the memory 520 and execute the following operations:
determining multiple measurement objects;
sending, to a network-side device, first delay-related information and first phase-related information corresponding to the multiple measurement objects; wherein the first delay-related information is associated with the first phase-related information.

In some embodiments, the processor 510 is further configured to:
send, to the network-side device, amplitudes corresponding to the multiple measurement objects.

In some embodiments, the processor 510 is further configured to:
when sending the first phase-related information to the network-side device, send information of a phase range used for quantization;
when sending the first delay-related information to the network-side device, send information of a time range used for quantization.

In some embodiments, the processor 510 is further configured to:
determine one or more second phase-related information items of the multiple measurement objects, and second delay-related information corresponding to the second phase-related information;
perform, based on the second delay-related information, delay removal processing on the second phase-related information to obtain third phase-related information;
obtain the first phase-related information by quantizing the third phase-related information.

In some embodiments, the processor 510 is further configured to:
subtract a first value from the second phase-related information to obtain the third phase-related information;
wherein the first value is calculated using the formula mod(2π*f*₀*τ*, 2*π*); wherein T is the second delay-related information; *f*₀ is a configured frequency value, or a center frequency value corresponding to a specific transmission resource, or a frequency value determined by at least one of: a center frequency value corresponding to a first transmission resource, a subcarrier spacing, a resource granularity, and a subcarrier format included in each resource block.

In some embodiments, the processor 510 is further configured to:
quantize the third phase-related information using a quantization codebook to determine the first phase-related information.

In some embodiments, the quantization codebook includes at least one of the following:
First codebook, the first codebook includes N-1 ***W***₁*,* and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$, *i* = 0,1,2,···, *N* - 1;
Second codebook, the second codebook includes P-1 ***W*₂**, and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2,···, *P-*1; wherein a value of P is configured by higher layer parameters, P is less than or equal to N;
Third codebook, the third codebook includes N-1 ***W***₃, and each of the N-1 ***W***₃ is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *N* - 1; *k =* 1,2,···, *K-*1;
Fourth codebook, the fourth codebook includes *N*₁ *-* 1 ***W***₄, and each of the *N*₁ - 1 ***W***₄ is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$*, i*₁ = 0,1,2,···, *N*₁ - 1 , ···, *i*_{*K*-1} = 0,1,2, ···, *N*_{*K*-1} *-* 1; wherein values of *Np* are configured by higher layer parameters or predefined in a protocol, p = 1,2,···, K - 1;
Fifth codebook, the fifth codebook includes P-1 ***W***₅, and each of the P-1 ***W***₅ is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *P* - 1; *k =* 1,2,···, *K* ; wherein a value of P is configured by higher layer parameters, P is less than or equal to N;
Sixth codebook, the sixth codebook includes P₁ - 1 ***W***₆, and each of the P₁ - 1 ***W***₆ is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2,···, P₁ - 1, ···, i_{K-1} = 0,1,2,···, P_{K-1} - 1; wherein values of P_{q} are configured by higher layer parameters, q = 1,2,···, K - 1;
   wherein N is a positive integer, and K is determined by the number of measurement objects.

In some embodiments, the processor 510 is further configured to:
jointly report the first phase-related information associated with a same first delay-related information; or,
jointly report the first phase-related information corresponding to a measurement resource of a same measurement object; or,
jointly report the first phase-related information corresponding to multiple reported first delay-related information items; or,
jointly report multiple first phase-related information items corresponding to a same subband; or,
jointly report first phase-related information items of a same type; or,
jointly report all determined first phase-related information.

In some embodiments, the processor 510 is further configured to:
determine a maximum phase value or a minimum phase value in a group of phase-related information reported jointly, and preprocess each first phase-related information item in the group of phase-related information reported jointly based on the maximum phase value or the minimum phase value.

In some embodiments, the processor 510 is further configured to:
send, to the network-side device, at least one of the following:
a maximum phase value or a minimum phase value of each group of phase-related information;
a subband index corresponding to the maximum phase value or the minimum phase value in each group of phase-related information;
a first delay-related information index corresponding to the maximum phase value or the minimum phase value in each group of phase-related information;
a measurement resource index corresponding to the maximum phase value or the minimum phase value in each group of phase-related information.

In some embodiments, the amplitudes corresponding to the multiple measurement objects include at least one of the following:
weighting values for the first delay-related information;
weighting values for the first phase-related information;
weighting coefficients for the first delay-related information;
weighting coefficients for the first phase-related information.
In some embodiments, the processor 510 is further configured to:
jointly report amplitudes corresponding to a measurement resource of a same measurement object; or,
jointly report amplitudes of a same type; or,
jointly report amplitudes corresponding to a same first delay-related information; or,
jointly report amplitudes corresponding to a same first phase-related information; or,
jointly report amplitudes corresponding to all determined first delay-related information; or,
jointly report amplitudes corresponding to all determined first phase-related information; or,
report all the amplitudes.

In some embodiments, the processor 510 is further configured to:
determine a maximum amplitude in a group of amplitudes reported jointly, and preprocess each amplitude in the group of amplitudes reported jointly based on the maximum amplitude.

In some embodiments, the processor 510 is further configured to:
send, to the network-side device, at least one of the following:
a maximum amplitude of each group of amplitudes;
a subband index corresponding to the maximum amplitude in each group of amplitudes;
a delay difference index corresponding to the maximum amplitude in each group of amplitudes;
a measurement resource index corresponding to the maximum amplitude in each group of amplitudes.

In some embodiments, the processor 510 is further configured to:
determine reference delay-related information among multiple items of the first delay-related information;
determine differences between the multiple items of the first delay-related information and the reference delay-related information;
send the differences and the reference delay-related information.

In some embodiments, the processor 510 is further configured to:
sequentially report multiple items of the first delay-related information based on a preset sorting strategy.

It should be noted that in FIG. 5, the bus architecture may include any number of interconnected buses and bridges, specifically linked by various circuits of one or more processors represented by the processor 510 and memory represented by the memory 520. The bus architecture may also link together various other circuits such as peripherals, voltage regulators, and power management circuits, which are well known in the art and therefore will not be further described herein. The bus interface provides an interface. The transceiver 500 may be multiple elements, i.e., including a transmitter and a receiver, providing a unit for communicating with various other devices over a transmission medium. For different terminals, the user interface may also be an interface capable of externally or internally connecting required devices, including but not limited to a keypad, a display, a speaker, a microphone, a joystick, etc. The processor 510 is responsible for managing the bus architecture and general processing, and the memory 520 may store data used by the processor 510 when performing operations.

In some embodiments, the processor 510 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor calls the computer program stored in the memory to execute any of the methods provided by the embodiments of the present disclosure according to the obtained executable instructions. The processor and the memory may also be physically arranged separately.

It should be noted here that the apparatus provided by the embodiments of the present disclosure can implement all the method steps implemented by the terminal-side method embodiments described above and achieve the same technical effects. The parts and beneficial effects in this embodiment that are the same as those in the method embodiments will not be described in detail here.

Referring to FIG. 6, an embodiment of the present disclosure provides a measurement reporting apparatus, including:
a first determination module 61 configured to determine multiple measurement objects;
a first sending module 62 configured to send, to a network-side device, first delay-related information and first phase-related information corresponding to the multiple measurement objects; wherein the first delay-related information is associated with the first phase-related information.

In some embodiments, the measurement reporting apparatus in the embodiments of the present disclosure further includes:
a fifth sending module configured to send, to the network-side device, amplitudes corresponding to the multiple measurement objects.

In some embodiments, the measurement reporting apparatus in the embodiments of the present disclosure further includes:
a third determination module configured to determine one or more second phase-related information items of the multiple measurement objects, and second delay-related information corresponding to the second phase-related information;
a first processing module configured to perform, based on the second delay-related information, delay removal processing on the second phase-related information to obtain third phase-related information;
a second processing module configured to obtain the first phase-related information by quantizing the third phase-related information.

In some embodiments, the first processing module includes:
a first processing unit configured to subtract a first value from the second phase-related information to obtain the third phase-related information;
wherein the first value is calculated using the formula mod(2πf₀*τ*, 2π); wherein τ is the second delay-related information; *f*₀ is a configured frequency value, or a center frequency value corresponding to a specific transmission resource, or a frequency value determined by at least one of: a center frequency value corresponding to a first transmission resource, a subcarrier spacing, a resource granularity, and a subcarrier format included in each resource block.

In some embodiments, the second processing module includes:
a second processing unit configured to quantize the third phase-related information using a quantization codebook to determine the first phase-related information.

In some embodiments, the quantization codebook includes at least one of the following:
First codebook, the first codebook includes N-1 ***W***₁*,* and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$, *i* = 0,1,2,···, *N* - 1;
Second codebook, the second codebook includes P-1 ***W*₂**, and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2,···, *P-*1; wherein a value of P is configured by higher layer parameters, P is less than or equal to N;
Third codebook, the third codebook includes N-1 ***W***₃, and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *N* - 1; *k =* 1,2,···, *K-*1;
Fourth codebook, the fourth codebook includes *N*₁ - 1 ***W***₄, and each of the *N*₁ - 1 ***W***₄ is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2,···, *N*₁ - 1 , ···, *i*_{*K*-1} = 0,1,2,···, *N_{K-1} -* 1; wherein values of *Np* are configured by higher layer parameters or predefined in a protocol, p = 1,2,···, K - 1;
Fifth codebook, the fifth codebook includes P-1 ***W***₅, and each of the P-1 ***W***₅ is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *P* - 1; *k =* 1,2,*···*, *K* ; wherein a value of P is configured by higher layer parameters, P is less than or equal to N;
Sixth codebook, the sixth codebook includes P₁ - 1 ***W*₆,** and each of the P₁ - 1 ***W***₆ is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2,···, P₁ - 1, ···, i_{K-1} = 0,1,2,···, P_{K-1} - 1; wherein values of P_{q} are configured by higher layer parameters, q = 1,2,···, K - 1;
   wherein N is a positive integer, and K is determined by the number of measurement objects.

In some embodiments, the first sending module is specifically configured to:
jointly report the first phase-related information associated with a same first delay-related information; or,
jointly report the first phase-related information corresponding to a measurement resource of a same measurement object; or,
jointly report the first phase-related information corresponding to multiple reported first delay-related information items; or,
jointly report multiple first phase-related information items corresponding to a same subband; or,
jointly report first phase-related information items of a same type; or,
jointly report all determined first phase-related information.

In some embodiments, the measurement reporting apparatus in the embodiments of the present disclosure further includes:
a third processing module configured to determine a maximum phase value or a minimum phase value in a group of phase-related information reported jointly, and preprocess each first phase-related information item in the group of phase-related information reported jointly based on the maximum phase value or the minimum phase value.

In some embodiments, the measurement reporting apparatus in the embodiments of the present disclosure further includes:
a fourth processing module configured to send, to the network-side device, at least one of the following:
a maximum phase value or a minimum phase value of each group of phase-related information;
a subband index corresponding to the maximum phase value or the minimum phase value in each group of phase-related information;
a first delay-related information index corresponding to the maximum phase value or the minimum phase value in each group of phase-related information;
a measurement resource index corresponding to the maximum phase value or the minimum phase value in each group of phase-related information.

In some embodiments, the amplitudes corresponding to the multiple measurement objects include at least one of the following:
weighting values for the first delay-related information;
weighting values for the first phase-related information;
weighting coefficients for the first delay-related information;
weighting coefficients for the first phase-related information.

In some embodiments, the fifth sending module is specifically configured to:
jointly report amplitudes corresponding to a measurement resource of a same measurement object; or,
jointly report amplitudes of a same type; or,
jointly report amplitudes corresponding to a same first delay-related information; or,
jointly report amplitudes corresponding to a same first phase-related information; or,
jointly report amplitudes corresponding to all determined first delay-related information; or,
jointly report amplitudes corresponding to all determined first phase-related information; or,
report all the amplitudes.

In some embodiments, the measurement reporting apparatus in the embodiments of the present disclosure further includes:
a fifth processing module configured to determine a maximum amplitude in a group of amplitudes reported jointly, and preprocess each amplitude in the group of amplitudes reported jointly based on the maximum amplitude.

In some embodiments, the measurement reporting apparatus in the embodiments of the present disclosure further includes:
a sixth sending module configured to send, to the network-side device, at least one of the following:
a maximum amplitude of each group of amplitudes;
a subband index corresponding to the maximum amplitude in each group of amplitudes;
a delay difference index corresponding to the maximum amplitude in each group of amplitudes;
a measurement resource index corresponding to the maximum amplitude in each group of amplitudes.

In some embodiments, the fifth sending module is further specifically configured to:
determine reference delay-related information among multiple items of the first delay-related information;
determine differences between the multiple items of the first delay-related information and the reference delay-related information;
send the differences and the reference delay-related information.

In some embodiments, the fifth sending module is further specifically configured to:
sequentially report multiple items of the first delay-related information based on a preset sorting strategy.

In some embodiments, the measurement reporting apparatus in the embodiments of the present disclosure further includes:
a seventh sending module configured to, when sending the first phase-related information to the network-side device, send information of a phase range used for quantization;
an eighth sending module configured to, when sending the first delay-related information to the network-side device, send information of a time range used for quantization.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
reporting the information of the phase range or the information of the time range used for quantization includes:
sending at least one of a, b, and w.

It should be noted here that the apparatus provided by the embodiments of the present disclosure can implement all the method steps implemented by the terminal-side method embodiments described above and achieve the same technical effects. The parts and beneficial effects in this embodiment that are the same as those in the method embodiments will not be described in detail here.

Specifically, as shown in FIG. 7, an embodiment of the present disclosure provides a measurement reporting apparatus, including: a memory 720, a transceiver 700, and a processor 710;
the memory 720 is configured to store program instructions; the transceiver 700 is configured to send and receive data under the control of the processor; the processor 710 is configured to read the program instructions in the memory and execute the following operations:
determining multiple measurement objects;
sending, to a network-side device, first delay-related information or first phase-related information corresponding to the multiple measurement objects;
when sending the first phase-related information to the network-side device, sending information of a phase range used for quantization;
when sending the first delay-related information to the network-side device, sending information of a time range used for quantization.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
reporting the information of the phase range or the information of the time range used for quantization includes:
sending at least one of a, b, and w.

In some embodiments, quantization granularities or numbers of quantization values are different for different phase ranges or different time ranges, wherein quantization granularity values or numbers of quantization values corresponding to the phase ranges or the time ranges are predefined by a protocol.

In some embodiments, the first phase-related information is determined based on at least one of the following codebooks:
First codebook, the first codebook includes N-1 ***W***₁*,* and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$, *i* = 0,1,2, ···*, N -* 1;
Second codebook, the second codebook includes P-1 ***W*₂**, and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ···, *P* - 1; wherein a value of P is configured by higher layer parameters, P is less than or equal to N;
Third codebook, the third codebook includes N-1 ***W***₃, and each of the N-1 W₃ is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ···, *N* - 1; *k =* 1,2,···, *K-*1;
Fourth codebook, the fourth codebook includes *N*₁ *-* 1 ***W***₄, and each of the *N*₁ - 1 ***W***₄ is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i₁* = 0,1,2,···, *N*₁ - 1, ···, *i*_{*K*-1} = 0,1,2, ···, *N*_{*K*-1} - 1; wherein values of *Np* are configured by higher layer parameters or predefined in a protocol, p = 1,2,···, K - 1;
Fifth codebook, the fifth codebook includes P-1 *W*₅*,* and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₙ* = 0,1,2,···, *P* - 1; *k =* 1,2,···, *K* ; wherein a value of P is configured by higher layer parameters, P is less than or equal to N;
Sixth codebook, the sixth codebook includes P₁ - 1 ***W***₆, and each of the P₁ - 1 ***W***₆ is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2,···, P₁ - 1, ···, i_{K-1} = 0,1,2,···, P_{K-1} - 1; wherein values of P_{q} are configured by higher layer parameters, q = 1,2,···, K - 1;
   wherein N is a positive integer, and K is determined by the number of measurement objects.

In some embodiments, the processor 710 is further configured to:
jointly report the first phase-related information associated with a same delay-related information; or,
jointly report the first phase-related information corresponding to a measurement resource of a same measurement object; or,
jointly report multiple first phase-related information items corresponding to a same subband; or,
jointly report first phase-related information items of a same type; or,
jointly report all determined first phase-related information.

It should be noted that in FIG. 7, the bus architecture may include any number of interconnected buses and bridges, specifically linked by various circuits of one or more processors represented by the processor 710 and memory represented by the memory 720. The bus architecture may also link together various other circuits such as peripherals, voltage regulators, and power management circuits, which are well known in the art and therefore will not be further described herein. The bus interface provides an interface. The transceiver 700 may be multiple elements, i.e., including a transmitter and a receiver, providing a unit for communicating with various other devices over a transmission medium. For different terminals, the user interface may also be an interface capable of externally or internally connecting required devices, including but not limited to a keypad, a display, a speaker, a microphone, a joystick, etc. The processor 710 is responsible for managing the bus architecture and general processing, and the memory 720 may store data used by the processor 710 when performing operations.

In some embodiments, the processor 710 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor calls the computer program stored in the memory to execute any of the methods provided by the embodiments of the present disclosure according to the obtained executable instructions. The processor and the memory may also be physically arranged separately.

It should be noted here that the apparatus provided by the embodiments of the present disclosure can implement all the method steps implemented by the terminal-side method embodiments described above and achieve the same technical effects. The parts and beneficial effects in this embodiment that are the same as those in the method embodiments will not be described in detail here.

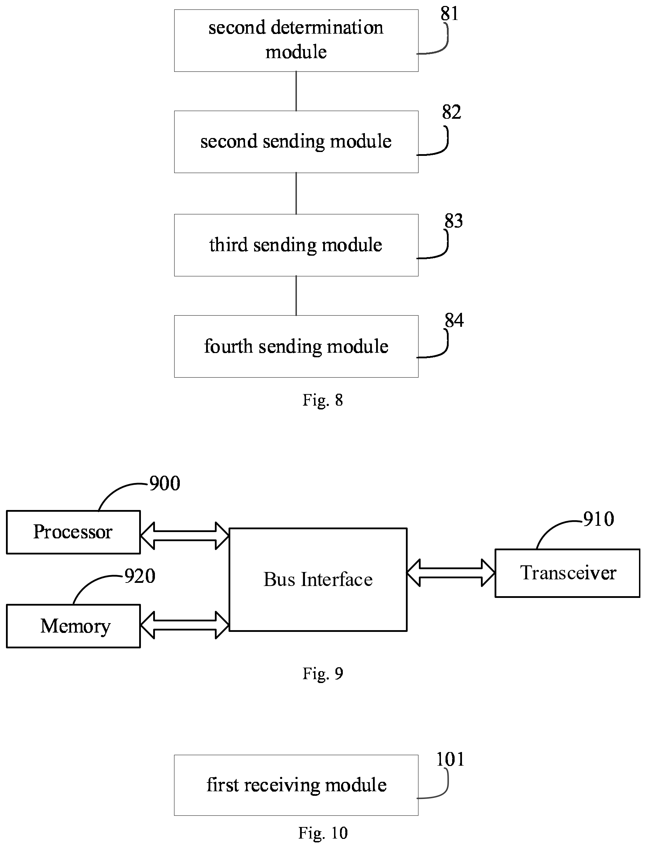

Specifically, as shown in FIG. 8, an embodiment of the present disclosure provides a measurement reporting apparatus, including:
a second determination module 81 configured to determine multiple measurement objects;
a second sending module 82 configured to send, to a network-side device, first delay-related information or first phase-related information corresponding to the multiple measurement objects;
a third sending module 83 configured to, when sending the first phase-related information to the network-side device, send information of a phase range used for quantization;
a fourth sending module 84 configured to, when sending the first delay-related information to the network-side device, send information of a time range used for quantization.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
reporting the information of the phase range or the information of the time range used for quantization includes:
sending at least one of a, b, and w.

In some embodiments, quantization granularities or numbers of quantization values are different for different phase ranges or different time ranges, wherein quantization granularity values or numbers of quantization values corresponding to the phase ranges or the time ranges are predefined by a protocol.

In some embodiments, the first phase-related information is determined based on at least one of the following codebooks:
First codebook, the first codebook includes N-1 ***W***₁*,* and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$, *i* = 0,1,2,···, *N* - 1;
Second codebook, the second codebook includes P-1 ***W*₂**, and each of the P-1 *W₂* is different, ${W}_{2} = \frac{1}{\sqrt{2}} \left[\begin{matrix}1 \\ {e}^{\frac{j 2 πi}{N}}\end{matrix}\right]$, *i* = 0,1,2,···,*P -* 1; wherein a value of P is configured by higher layer parameters, P is less than or equal to N;
Third codebook, the third codebook includes N-1 ***W***₃, and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *N -* 1; *k =* 1,2,···, *K-*1;
Fourth codebook, the fourth codebook includes *N*₁ - 1 ***W***₄, and each of the *N*₁ - 1 ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$*, i*₁ = 0,1,2,···, *N*₁ - 1 , ···, *i*_{*K*-1} = 0,1,2,··*·*, *N*_{*K*-1} *-* 1; wherein values of *Np* are configured by higher layer parameters or predefined in a protocol, p = 1,2,···, K - 1;
Fifth codebook, the fifth codebook includes P-1 ***W*₅,** and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *P* - 1; *k* = 1,2, *···*, *K* ; wherein a value of P is configured by higher layer parameters, P is less than or equal to N;
Sixth codebook, the sixth codebook includes P₁ - 1 ***W***₆, and each of the P₁ - 1 ***W***₆ is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, it = 0,1,2,···, P₁ - 1, ···, i_{K-1} = 0,1,2,···, P_{K-1} - 1; wherein values of P_{q} are configured by higher layer parameters, q = 1,2,···, K - 1;
   wherein N is a positive integer, and K is determined by the number of measurement objects.

In some embodiments, the second sending module 82 is specifically configured to:
jointly report the first phase-related information associated with a same delay-related information; or,
jointly report the first phase-related information corresponding to a measurement resource of a same measurement object; or,
jointly report multiple first phase-related information items corresponding to a same subband; or,
jointly report first phase-related information items of a same type; or,
jointly report all determined first phase-related information.

It should be noted here that the apparatus provided by the embodiments of the present disclosure can implement all the method steps implemented by the terminal-side method embodiments described above and achieve the same technical effects. The parts and beneficial effects in this embodiment that are the same as those in the method embodiments will not be described in detail here.

Referring to FIG. 9, an embodiment of the present disclosure further provides a measurement obtaining apparatus, including: a memory 920, a transceiver 900, and a processor 910; the memory 920 is configured to store program instructions; the transceiver 900 is configured to send and receive data under the control of the processor; the processor 910 is configured to read the program instructions in the memory and execute the following operations:
receiving first delay-related information and first phase-related information sent by a terminal corresponding to multiple measurement objects; wherein the first delay-related information is associated with the first phase-related information.

In some embodiments, the transceiver 900 is configured to:
receive amplitudes sent by the terminal corresponding to the multiple measurement objects.

In some embodiments, the first phase-related information is determined based on a quantization codebook;
the quantization codebook includes at least one of the following:
First codebook, the first codebook includes N-1 ***W***₁*,* and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$, *i* = 0,1,2,···, *N* - 1;
Second codebook, the second codebook includes P-1 ***W*₂**, and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2,···, *P-*1; wherein a value of P is configured by higher layer parameters, P is less than or equal to N;
Third codebook, the third codebook includes N-1 ***W***₃, and each of the N-1 ***W***₃ is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *N* - 1; *k* = 1,2,···*, K-*1;
Fourth codebook, the fourth codebook includes *N*₁ *-* 1 ***W***₄, and each of the *N*₁ - 1 ***W***₄ is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2, ··· ,*N*₁ - 1 , ···, *i*_{*K*-1} = 0,1,2, ···, *N*_{*κ*-1} *-* 1; wherein values of *Np* are configured by higher layer parameters or predefined in a protocol, p = 1,2, ···, K - 1;
Fifth codebook, the fifth codebook includes P-1 ***W*₅**, and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *P* - 1; *k* = 1,2, ···, *K* ; wherein a value of P is configured by higher layer parameters, P is less than or equal to N;
Sixth codebook, the sixth codebook includes P₁ - 1 ***W*₆**, and each of the P₁ - 1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ··· , P₁ - 1, ···, i_{K-1} = 0,1,2, ···, P_{K-1} - 1; wherein values of P_{q} are configured by higher layer parameters, q = 1,2, ···, K - 1;
   wherein N is a positive integer, and K is determined by the number of measurement objects.

In some embodiments, the transceiver 900 is further configured to:
receive at least one of the following sent by the terminal:
a maximum phase value or a minimum phase value of each group of phase-related information;
a subband index corresponding to the maximum phase value or the minimum phase value in each group of phase-related information;
a delay-related information index corresponding to the maximum phase value or the minimum phase value in each group of phase-related information;
a measurement resource index corresponding to the maximum phase value or the minimum phase value in each group of phase-related information.

In some embodiments, the amplitudes corresponding to the multiple measurement objects include at least one of the following:
weighting values for the first delay-related information;
weighting values for the first phase-related information;
weighting coefficients for the first delay-related information;
weighting coefficients for the first phase-related information.

In some embodiments, the transceiver 900 is further configured to:
receive at least one of the following sent by the terminal:
a maximum amplitude of each group of amplitudes;
a subband index corresponding to the maximum amplitude in each group of amplitudes;
a delay difference index corresponding to the maximum amplitude in each group of amplitudes;
a measurement resource index corresponding to the maximum amplitude in each group of amplitudes.

In some embodiments, the first delay-related information corresponding to the multiple measurement objects includes:
reference delay-related information and differences corresponding to the reference delay-related information.

In some embodiments, the transceiver 900 is further configured to:
receive at least one of the following used for quantization sent by the terminal:
information of a phase range;
information of a time range.

It should be noted that in FIG. 9, the bus architecture may include any number of interconnected buses and bridges, specifically linked by various circuits of one or more processors represented by the processor 910 and memory represented by the memory 920. The bus architecture may also link together various other circuits such as peripherals, voltage regulators, and power management circuits, which are well known in the art and therefore will not be further described herein. The bus interface provides an interface. The transceiver 900 may be multiple elements, i.e., including a transmitter and a receiver, providing a unit for communicating with various other devices over a transmission medium. For different terminals, the user interface may also be an interface capable of externally or internally connecting required devices, including but not limited to a keypad, a display, a speaker, a microphone, a joystick, etc. The processor 910 is responsible for managing the bus architecture and general processing, and the memory 920 may store data used by the processor 910 when performing operations.

In some embodiments, the processor 910 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor calls the computer program stored in the memory to execute any of the methods provided by the embodiments of the present disclosure according to the obtained executable instructions. The processor and the memory may also be physically arranged separately.

It should be noted here that the apparatus provided by the embodiments of the present disclosure can implement all the method steps implemented by the network-side device method embodiments described above and achieve the same technical effects. The parts and beneficial effects in this embodiment that are the same as those in the method embodiments will not be described in detail here.

In some embodiments, referring to FIG. 10, an embodiment of the present disclosure further provides a measurement obtaining apparatus, including:
a first receiving module 101 configured to receive first delay-related information and first phase-related information sent by a terminal corresponding to multiple measurement objects; wherein the first delay-related information is associated with the first phase-related information.

In some embodiments, the network-side device receives amplitudes sent by the terminal corresponding to the multiple measurement objects.

In some embodiments, the first phase-related information is determined based on a quantization codebook;
the quantization codebook includes at least one of the following:
First codebook, the first codebook includes N-1 ***W*₁**, and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$, *i* = 0,1,2, ···, *N* - 1;
Second codebook, the second codebook includes P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2,···,*P -* 1; wherein a value of P is configured by higher layer parameters, P is less than or equal to N;
Third codebook, the third codebook includes N-1 ***W*₃,** and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ···, *N* - 1; *k =* 1,2, ···, *K-*1;
Fourth codebook, the fourth codebook includes *N*₁ *-* 1 ***W*₄,** and each of the *N*₁ - 1 ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, it = 0,1,2, ··· , *N*₁ - 1 , ··· , *i*_{*K*-1} = 0,1,2, ···, *N*_{*K*-1} *-* 1 ; wherein values of *Np* are configured by higher layer parameters or predefined in a protocol, p = 1,2,···, K - 1;
Fifth codebook, the fifth codebook includes P-1 ***W*₅**, and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,··· , *P* - 1 ; *k* = 1,2, ··· , *K* ; wherein a value of P is configured by higher layer parameters, P is less than or equal to N;
Sixth codebook, the sixth codebook includes P₁ - 1 ***W*₆,** and each of the P₁ - 1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$ , i₁ = 0,1,2, ···, P₁ - 1, ···, i_{K-1} = 0,1,2, ···, P_{K-1} - 1; wherein values of P_{q} are configured by higher layer parameters, q = 1,2, ···, K - 1;
   wherein N is a positive integer, and K is determined by the number of measurement objects.

In some embodiments, the measurement obtaining apparatus in the embodiments of the present disclosure further includes:
a fourth receiving module configured to receive at least one of the following sent by the terminal:
a maximum phase value or a minimum phase value of each group of phase-related information;
a subband index corresponding to the maximum phase value or the minimum phase value in each group of phase-related information;
a delay-related information index corresponding to the maximum phase value or the minimum phase value in each group of phase-related information;
a measurement resource index corresponding to the maximum phase value or the minimum phase value in each group of phase-related information.

In some embodiments, the amplitudes corresponding to the multiple measurement objects include at least one of the following:
weighting values for the first delay-related information;
weighting values for the first phase-related information;
weighting coefficients for the first delay-related information;
weighting coefficients for the first phase-related information.

In some embodiments, the measurement obtaining apparatus in the embodiments of the present disclosure further includes:
a fifth receiving module configured to receive at least one of the following sent by the terminal:
a maximum amplitude of each group of amplitudes;
a subband index corresponding to the maximum amplitude in each group of amplitudes;
a delay difference index corresponding to the maximum amplitude in each group of amplitudes;
a measurement resource index corresponding to the maximum amplitude in each group of amplitudes.

In some embodiments, the first delay-related information corresponding to the multiple measurement objects includes:
reference delay-related information and differences corresponding to the reference delay-related information.

In some embodiments, the measurement obtaining apparatus in the embodiments of the present disclosure further includes:
a sixth receiving module configured to receive at least one of the following used for quantization sent by the terminal:
information of a phase range;
information of a time range.

It should be noted here that the apparatus provided by the embodiments of the present disclosure can implement all the method steps implemented by the network-side device method embodiments described above and achieve the same technical effects. The parts and beneficial effects in this embodiment that are the same as those in the method embodiments will not be described in detail here.

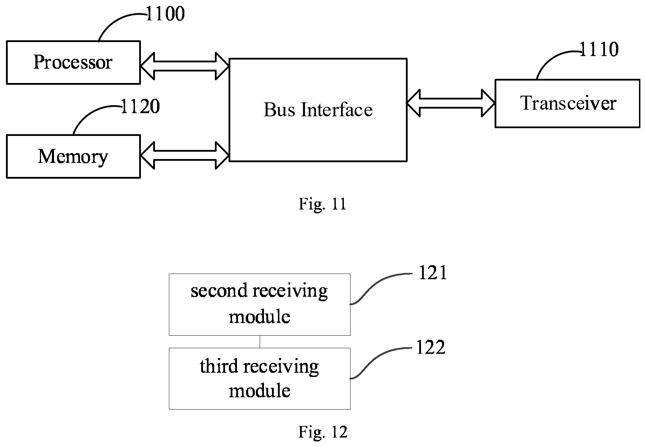

Specifically, referring to FIG. 11, an embodiment of the present disclosure further provides a measurement obtaining apparatus, including: a memory 1120, a transceiver 1100, and a processor 1110; the memory 1120 is configured to store program instructions; the transceiver 1100 is configured to send and receive data under the control of the processor; the processor 1110 is configured to read the program instructions in the memory and execute the following operations:
receiving first delay-related information or first phase-related information sent by a terminal corresponding to multiple measurement objects;
receiving information of a phase range or information of a time range used for quantization sent by the terminal.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
receiving the information of the phase range or the information of the time range used for quantization sent by the terminal includes:
receiving at least one of a, b, and w reported by the terminal.

In some embodiments, quantization granularities or numbers of quantization values are different for different phase ranges or different time ranges, wherein quantization granularity values or numbers of quantization values corresponding to the phase ranges or the time ranges are predefined by a protocol.

In some embodiments, the phase-related information is determined based on at least one of the following codebooks:
First codebook, the first codebook includes N-1 ***W*₁,** and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$ , *i* = 0,1,2, ···*, N -* 1;
Second codebook, the second codebook includes P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ···, *P* - 1; wherein a value of P is configured by higher layer parameters, P is less than or equal to N;
Third codebook, the third codebook includes N-1 ***W*₃,** and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$ , *iₖ* = 0,1,2, ···, *N* - 1; *k =* 1,2, ···, *K-*1;
Fourth codebook, the fourth codebook includes *N*₁ *- 1* ***W*₄,** and each of the *N*₁ - 1 ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2, ···, *N*₁ - 1 , ···, *i*_{*K*-1} = 0,1,2, ···, *N*_{*K*-1} - 1 ; wherein values of *Np* are configured by higher layer parameters or predefined in a protocol, p = 1,2, ···, K - 1;
Fifth codebook, the fifth codebook includes P-1 ***W*₅,** and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ··· *, P* - 1; *k* = 1,2,··· , *K* ; wherein a value of P is configured by higher layer parameters, P is less than or equal to N;
Sixth codebook, the sixth codebook includes P₁ - 1 ***W*₆,** and each of the P₁ - 1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ··· , P₁ - 1, ··· , i_{K-1} = 0,1,2, ···, P_{K-1} - 1; wherein values of P_{q} are configured by higher layer parameters, q = 1,2,···, K - 1;
   wherein N is a positive integer, and K is determined by the number of measurement objects.

It should be noted that in FIG. 11, the bus architecture may include any number of interconnected buses and bridges, specifically linked by various circuits of one or more processors represented by the processor 1110 and memory represented by the memory 1120. The bus architecture may also link together various other circuits such as peripherals, voltage regulators, and power management circuits, which are well known in the art and therefore will not be further described herein. The bus interface provides an interface. The transceiver 1100 may be multiple elements, i.e., including a transmitter and a receiver, providing a unit for communicating with various other devices over a transmission medium. For different terminals, the user interface may also be an interface capable of externally or internally connecting required devices, including but not limited to a keypad, a display, a speaker, a microphone, a joystick, etc. The processor 1110 is responsible for managing the bus architecture and general processing, and the memory 1120 may store data used by the processor 1110 when performing operations.

In some embodiments, the processor 1110 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor calls the computer program stored in the memory to execute any of the methods provided by the embodiments of the present disclosure according to the obtained executable instructions. The processor and the memory may also be physically arranged separately.

It should be noted here that the apparatus provided by the embodiments of the present disclosure can implement all the method steps implemented by the network-side device method embodiments described above and achieve the same technical effects. The parts and beneficial effects in this embodiment that are the same as those in the method embodiments will not be described in detail here.

Referring to FIG. 12, an embodiment of the present disclosure further provides a measurement obtaining apparatus, including:
a second receiving module 121 configured to receive first delay-related information or first phase-related information sent by a terminal corresponding to multiple measurement objects;
a third receiving module 122 configured to receive information of a phase range or information of a time range used for quantization sent by the terminal.

In some embodiments, the phase range or the time range includes at least one of the following:
[0, a];
[a, b];
[-a, 0];
[-a, b];
range number w, where the range corresponding to w is predefined in a protocol;
wherein a and b are positive numbers;
receiving the information of the phase range or the information of the time range used for quantization sent by the terminal includes:
receiving at least one of a, b, and w reported by the terminal.

In some embodiments, quantization granularities or numbers of quantization values are different for different phase ranges or different time ranges, wherein quantization granularity values or numbers of quantization values corresponding to the phase ranges or the time ranges are predefined by a protocol.

In some embodiments, the phase-related information is determined based on at least one of the following codebooks:
First codebook, the first codebook includes N-1 ***W*₁,** and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$, *i* = 0,1,2, ···, *N* - 1;
Second codebook, the second codebook includes P-1 ***W*₂,** and each of the P-1 ***W***₂ is different, ${W}_{2} = \frac{1}{\sqrt{2}} \left[\begin{matrix}1 \\ {e}^{\frac{j 2 πi}{N}}\end{matrix}\right]$, *i* = 0,1,2, ···, *P* - 1; wherein a value of P is configured by higher layer parameters, P is less than or equal to N;
Third codebook, the third codebook includes N-1 ***W*₃**, and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ···,N - 1; *k* = 1,2,···, *K-*1;
Fourth codebook, the fourth codebook includes *N*₁ *-* 1 ***W*₄,** and each of the *N*₁ - 1 ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2, ···, *N*₁ - 1 , ···, *i*_{*K*-1} = 0,1,2, ···, *N*_{*K*-1} - 1 ; wherein values of *Np* are configured by higher layer parameters or predefined in a protocol, p = 1,2, ··· , K - 1;
Fifth codebook, the fifth codebook includes P-1 ***W*₅,** and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ··· , *P* - 1; *k =* 1,2, ··· , *K* ; wherein a value of P is configured by higher layer parameters, P is less than or equal to N;
Sixth codebook, the sixth codebook includes P₁ - 1 ***W*₆,** and each of the P₁ - 1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ··· , P₁ - 1, ···, i_{K-1} = 0,1,2, ··· , P_{K-1} - 1; wherein values of P_{q} are configured by higher layer parameters, q = 1,2,···, K - 1;
   wherein N is a positive integer, and K is determined by the number of measurement objects.

It should be noted here that the apparatus provided by the embodiments of the present disclosure can implement all the method steps implemented by the network-side device method embodiments described above and achieve the same technical effects. The parts and beneficial effects in this embodiment that are the same as those in the method embodiments will not be described in detail here.

An embodiment of the present disclosure further provides a processor-readable storage medium, wherein the processor-readable storage medium stores a computer program, and the computer program is configured to cause the processor to execute the steps of the measurement reporting method on the terminal side described above, or the computer program is configured to cause the processor to execute the steps of the measurement obtaining method on the network-side device described above, and can achieve the same technical effects. The parts and beneficial effects in this embodiment that are the same as those in the method embodiments will not be described in detail here.

The readable storage medium may be any available medium or data storage device that can be accessed by a processor, including but not limited to magnetic memory (e.g., floppy disk, hard disk, magnetic tape, Magneto Optical (MO) disk, etc.), optical memory (e.g., Compact Disc (CD), Digital Video Disc (DVD), Blu-ray Disc (BD), High-definition Versatile Disc (HVD), etc.), and semiconductor memory (e.g., ROM, Erasable Programmable Read-Only Memory (EPROM), Electrically Erasable Programmable Read-Only Memory (EEPROM), Non-volatile Memory Device (NAND FLASH), Solid State Drive (SSD)), etc.

The technical solutions provided by the embodiments of the present disclosure can be applied to various systems, especially 5th Generation (5G) systems. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide Interoperability for Microwave Access (WiMAX) system, 5G New Radio (NR) system, etc. These systems all include terminal devices and network-side devices. The system may also include a core network part, such as Evolved Packet System (EPS), 5G System (5GS), etc.

The terminal device involved in the embodiments of the present disclosure may refer to a device that provides voice and/or data connectivity to a user, a handheld device with wireless connection function, or other processing device connected to a wireless modem. In different systems, the name of the terminal device may be different. For example, in a 5G system, the terminal device may be called User Equipment (UE). The wireless terminal device may communicate with one or more Core Networks (CN) via a Radio Access Network (RAN). The wireless terminal device may be a mobile terminal device, such as a mobile phone (or "cellular" phone) and a computer with a mobile terminal device, for example, a portable, pocket-sized, handheld, computer-built-in, or vehicle-mounted mobile device, which exchanges language and/or data with the radio access network. For example, Personal Communication Service (PCS) phone, cordless phone, Session Initiated Protocol (SIP) phone, Wireless Local Loop (WLL) station, Personal Digital Assistant (PDA), etc. The wireless terminal device may also be called system, subscriber unit, subscriber station, mobile station, mobile, remote station, access point, remote terminal, access terminal, user terminal, user agent, user device. The embodiments of the present disclosure do not limit this.

The network-side device involved in the embodiments of the present disclosure may be a base station, which may include multiple cells serving terminals. Depending on the specific application scenario, the base station may also be called an access point, or may be a device in the access network that communicates with wireless terminal devices over one or more sectors via the air interface, or other names. The network-side device may be used to exchange received air frames with Internet Protocol (IP) packets, acting as a router between the wireless terminal device and the rest of the access network, which may include the IP communication network. The network-side device may also coordinate attribute management of the air interface. For example, the network-side device involved in the embodiments of the present disclosure may be a Base Transceiver Station (BTS) in Global System for Mobile communications (GSM) or Code Division Multiple Access (CDMA), a NodeB in Wideband Code Division Multiple Access (WCDMA), an evolutional Node B (eNB or e-NodeB) in Long Term Evolution (LTE) system, a 5G base station (gNB) in 5G network architecture (next generation system), a Home evolved Node B (HeNB), a relay node, a femto, a pico, etc. The embodiments of the present disclosure do not limit this. In some network structures, the network-side device may include a Centralized Unit (CU) node and a Distributed Unit (DU) node, which may also be geographically separated.

The network-side device and the terminal device may each use one or more antennas for Multi-Input Multi-Output (MIMO) transmission. MIMO transmission may be Single User MIMO (SU-MIMO) or Multiple User MIMO (MU-MIMO). Depending on the shape and number of antenna combinations, MIMO transmission may be 2-Dimensional MIMO (2D-MIMO), 3-Dimensional MIMO (3D-MIMO), Full Dimension MIMO (FD-MIMO), or massive-MIMO, and may also be diversity transmission, precoding transmission, or beamforming transmission.

It should be noted that the division of units in the embodiments of the present disclosure is schematic and merely a logical function division. In actual implementation, there may be other division methods. Furthermore, the functional units in the various embodiments of the present disclosure may be integrated into one processing unit, or each unit may exist physically separately, or two or more units may be integrated into one unit. The integrated unit may be implemented in the form of hardware or in the form of software functional units.

If the integrated unit is implemented in the form of a software functional unit and sold or used as an independent product, it may be stored in a processor-readable storage medium. Based on such understanding, the essence of the technical solution of the present disclosure, or the part contributing to the related art, or all or part of the technical solution, may be embodied in the form of a software product. The computer software product is stored in a storage medium and includes several instructions to cause a computer device (which may be a personal computer, a server, or a network-side device, etc.) or a processor to execute all or part of the steps of the methods described in the various embodiments of the present disclosure. The aforementioned storage medium includes: U disk, mobile hard disk, Read-Only Memory (ROM), Random Access Memory (RAM), magnetic disk, optical disk, and other media that can store program codes.

Those skilled in the art will appreciate that the embodiments of the present disclosure may be provided as a method, a system, or a computer program product. Accordingly, the present disclosure may take the form of an entirely hardware embodiment, an entirely software embodiment, or an embodiment combining software and hardware aspects. Furthermore, the present disclosure may take the form of a computer program product embodied on one or more computer-usable storage media (including but not limited to disk storage and optical storage, etc.) containing computer-usable program code.

The present disclosure is described with reference to flowcharts and/or block diagrams of methods, devices (systems), and computer program products according to embodiments of the present disclosure. It will be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general-purpose computer, a special-purpose computer, an embedded processor, or other programmable data processing device to produce a machine, such that the instructions executed by the processor of the computer or other programmable data processing device produce a device for implementing the functions specified in one or more flows in the flowcharts and/or one or more blocks in the block diagrams.

These processor-executable instructions may also be stored in a processor-readable memory that can direct a computer or other programmable data processing device to operate in a specific manner, such that the instructions stored in the processor-readable memory produce an article of manufacture including an instruction device that implements the functions specified in one or more flows in the flowcharts and/or one or more blocks in the block diagrams.

These processor-executable instructions may also be loaded onto a computer or other programmable data processing device, such that a series of operational steps are performed on the computer or other programmable device to produce a computer-implemented process, thereby the instructions executed on the computer or other programmable device provide steps for implementing the functions specified in one or more flows in the flowcharts and/or one or more blocks in the block diagrams.

It should be noted that the division of the above various modules is merely a logical functional division. In actual implementation, they may be fully or partially integrated into one physical entity, or physically separated. Moreover, these modules may all be implemented in the form of software invoked by processing elements, or all in the form of hardware, or some modules in the form of software invoked by processing elements and some in the form of hardware. For example, the determination module may be a separate processing element, or may be integrated into a chip of the above-mentioned device for implementation. Furthermore, it may be stored in the memory of the above-mentioned device in the form of program code, and invoked by a processing element of the above-mentioned device to execute the functions of the determination module. The implementation of other modules is similar. In addition, all or part of these modules may be integrated together or implemented independently. The processing element described herein may be an integrated circuit with signal processing capabilities. During the implementation process, each step of the above methods or each of the above modules may be implemented by a hardware integrated logic circuit in a processor element or instructions in the form of software.

For example, each module, unit, sub-unit, or sub-module may be one or more integrated circuits configured to implement the above methods, such as one or more Application Specific Integrated Circuits (ASICs), or one or more Digital Signal Processors (DSPs), or one or more Field Programmable Gate Arrays (FPGAs), etc. For another example, when a certain module above is implemented in the form of a processing element scheduling program code, the processing element may be a general-purpose processor, such as a Central Processing Unit (CPU) or other processor capable of invoking program code. For another example, these modules may be integrated together and implemented in the form of a system-on-a-chip (SOC).

The terms "first," "second," etc. in the specification and claims of the present disclosure are used to distinguish similar objects and are not necessarily used to describe a specific order or sequence. It should be understood that the data so used may be interchanged where appropriate so that the embodiments of the present disclosure described herein can be implemented in an order other than those illustrated or described herein. Furthermore, the terms "include" and "have" and any variations thereof are intended to cover non-exclusive inclusion. For example, a process, method, system, product, or device that includes a series of steps or units is not necessarily limited to those steps or units expressly listed, but may include other steps or units not expressly listed or inherent to such process, method, product, or device. Furthermore, "and/or" in the specification and claims indicates at least one of the connected objects. For example, A and/or B and/or C indicates seven cases: A alone, B alone, C alone, both A and B, both B and C, both A and C, and all of A, B, and C. Similarly, "at least one of A and B" in the specification and claims should be understood as "A alone, B alone, or both A and B exist."

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A measurement reporting method, comprising:
determining, by a terminal, multiple measurement objects; and
sending, by the terminal, first delay-related information and first phase-related information corresponding to the multiple measurement objects to a network side device;
wherein the first delay-related information is related to the first phase-related information.

2. The method according to claim 1, further comprising:
sending, by the terminal, amplitudes corresponding to the multiple measurement objects to the network side device.

3. The method according to claim 2, further comprising:
determining, by the terminal, one or more second phase-related information of the multiple measurement objects, and second delay-related information corresponding to the second phase-related information;
performing, by the terminal, delay removal processing on the second phase-related information based on the second delay-related information, to obtain third phase-related information; and
obtaining, by the terminal, the first phase-related information by quantizing the third phase-related information.

4. The method according to claim 3, wherein performing, by the terminal, the delay removal processing on the second phase-related information based on the second delay-related information, to obtain the third phase-related information, comprises:
subtracting, by the terminal, a first value from the second phase-related information to obtain the third phase-related information;
wherein the first value is calculated by a formula: mod(2*πf*₀*τ* , 2*π*);
wherein τ is the second delay-related information; and
*f*₀ is a configured frequency value, or a center frequency value corresponding to a specific transmission resource, or a frequency value determined by at least one of: a center frequency value corresponding to a first transmission resource, a subcarrier spacing, a resource granularity, and a subcarrier format contained in each resource block.

5. The method according to claim 3, wherein the obtaining, by the terminal, the first phase-related information by quantizing the third phase-related information, comprises:
quantizing, by the terminal, the third phase-related information by using a quantization codebook to determine the first phase-related information.

6. The method according to claim 5, wherein the quantization codebook comprises at least one of:
first codebook, the first codebook comprises N-1 ***W*₁**, and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$, *i* = 0,1,2, ··· , *N* - 1;
second codebook, the second codebook comprises P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ··· , *P -* 1; wherein a value of P is configured by higher layer parameters, P is less than or equal to N;
third codebook, the third codebook comprises N-1 ***W*₃,** and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ··· , *N* - 1; *k* = 1,2, ··· , *K -* 1;
fourth codebook, the fourth codebook comprises *N*₁ - 1 ***W*₄,** and each of the *N*₁ *- 1* ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2, ···, *N*₁ - 1 ··· , *i*_{*K*-1} = 0,1,2, ··· , *N*_{*K*-1} *-* 1; wherein values of Np are configured by higher layer parameters or predefined in a protocol, p = 1,2, ···, K - 1;
fifth codebook, the fifth codebook comprises P-1 ***W*₅,** and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ··· , *P* - 1; *k* = 1, 2, ···, *K* ; wherein a value of P is configured by higher layer parameters, P is less than or equal to N;
sixth codebook, the sixth codebook comprises P₁ - 1 ***W*₆*,*** and each of the P₁-1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ··· , P₁ - 1 , , i_{K-1} = 0,1,2, ··· , P_{K-1} - 1; wherein values of P_{q} are configured by higher layer parameters, q = 1, 2, ··· , K - 1;
wherein N is a positive integer, and K is determined by the number of measurement objects.

7. The method according to claim 1, wherein sending, by the terminal to the network side device, the first phase-related information corresponding to the multiple measurement objects, comprises at least one of:
jointly reporting, by the terminal, the first phase-related information related to a same first delay-related information;
jointly reporting, by the terminal, the first phase-related information corresponding to measurement resources of a same measurement object;
jointly reporting, by the terminal, the first phase-related information corresponding to a plurality of reported first delay-related information;
jointly reporting, by the terminal, a plurality of the first phase-related information corresponding to a same subband;
jointly reporting, by the terminal, the first phase-related information of a same type; or
jointly reporting, by the terminal, all determined first phase-related information.

8. The method according to claim 7, further comprising:
determining, by the terminal, a maximum phase value or a minimum phase value in a set of jointly reported phase-related information, and preprocessing each of the first phase-related information in the set of jointly reported phase-related information based on the maximum phase value or the minimum phase value.

9. The method according to claim 8, further comprising:
sending, by the terminal to the network side device, at least one of:
a maximum phase value or a minimum phase value of each set of phase-related information;
a subband index corresponding to the maximum phase value or the minimum phase value in each set of phase-related information;
a first delay-related information index corresponding to the maximum phase value or the minimum phase value in each set of phase-related information; or
a measurement resource index corresponding to the maximum phase value or the minimum phase value in each set of phase-related information.

10. The method according to claim 2, wherein the amplitudes corresponding to the multiple measurement objects comprise at least one of:
a weighting value of the first delay-related information;
a weighting value of the first phase-related information;
a weighting coefficient of the first delay-related information; or
a weighting coefficient of the first phase-related information.

11. The method according to claim 2, wherein sending, by the terminal to the network side device, the amplitudes corresponding to the multiple measurement objects, comprises at least one of:
jointly reporting, by the terminal, amplitudes corresponding to measurement resources of a same measurement object;
jointly reporting, by the terminal, amplitudes of a same type;
jointly reporting, by the terminal, amplitudes corresponding to a same first delay-related information;
jointly reporting, by the terminal, amplitudes corresponding to a same first phase-related information;
jointly reporting, by the terminal, amplitudes corresponding to all determined first delay-related information;
jointly reporting, by the terminal, amplitudes corresponding to all determined first phase-related information; or
reporting, by the terminal, all the amplitudes.

12. The method according to claim 11, further comprising:
determining, by the terminal, a maximum amplitude in a set of jointly reported amplitudes, and preprocessing each amplitude in the set of jointly reported amplitudes based on the maximum amplitude.

13. The method according to claim 12, further comprising:
sending, by the terminal to the network side device, at least one of:
a maximum amplitude of each set of amplitudes;
a subband index corresponding to the maximum amplitude in each set of amplitudes;
a delay difference index corresponding to the maximum amplitude in each set of amplitudes; or
a measurement resource index corresponding to the maximum amplitude in each set of amplitudes.

14. The method according to claim 1, wherein sending, by the terminal to the network side device, the first delay-related information corresponding to the multiple measurement objects, comprises:
determining, by the terminal, reference delay-related information among a plurality of the first delay-related information;
determining, by the terminal, differences between the plurality of first delay-related information and the reference delay-related information; and
sending, by the terminal, the differences and the reference delay-related information.

15. The method according to claim 1, wherein sending, by the terminal to the network side device, the first delay-related information corresponding to the multiple measurement objects, comprises:
sequentially reporting, by the terminal, a plurality of the first delay-related information based on a preset sorting strategy.

16. The method according to claim 1, further comprising:
in a case of sending the first phase-related information to the network side device, sending, by the terminal, information of a phase range used for quantization; and
in a case of sending the first delay-related information to the network side device, sending, by the terminal, information of a time range used for quantization.

17. The method according to claim 16, wherein the phase range or the time range comprises at least one of:
[0, a];
[a, b];
[-a, 0];
[-a, b]; or
a range number w, wherein a range corresponding to w is pre-specified in a protocol;
wherein a and b are positive numbers; and
the sending, by the terminal, the information of the phase range or the information of the time range used for quantization comprises:
sending, by the terminal, at least one of a, b and w.

18. A measurement reporting method, comprising:
determining, by a terminal, multiple measurement objects;
sending, by the terminal, first delay-related information or first phase-related information corresponding to the multiple measurement objects to a network side device;
in a case of sending the first phase-related information to the network side device, sending, by the terminal, information of a phase range used for quantization; and
in a case of sending the first delay-related information to the network side device, sending, by the terminal, information of a time range used for quantization.

19. The method according to claim 18, wherein the phase range or the time range comprises at least one of:
[0, a];
[a, b];
[-a, 0];
[-a, b]; or
a range number w, wherein a range corresponding to w is pre-specified in a protocol;
wherein a and b are positive numbers; and
the sending, by the terminal, the information of the phase range or the information of the time range used for quantization comprises:
sending, by the terminal, at least one of a, b and w.

20. The method according to claim 19, wherein quantization granularities or numbers of quantization values are different for different phase ranges or different time ranges, and a quantization granularity value or a number of quantization values corresponding to a phase range or a time range is pre-specified by a protocol.

21. The method according to claim 18, wherein the first phase-related information is determined based on at least one of the following codebooks:
first codebook, the first codebook comprises N-1 ***W*₁,** and each of the N-1 ***W***₁ is different, ${W}_{1} = \frac{1}{\sqrt{2}} \left[\begin{matrix}1 \\ {e}^{\frac{j 2 πi}{N}}\end{matrix}\right]$, *i* = 0,1,2, ···, *N* - 1;
second codebook, the second codebook comprises P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ··· , *P -* 1; wherein a value of P is configured by higher layer parameters, P is less than or equal to N;
third codebook, the third codebook comprises N-1 ***W*₃,** and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *N* - 1; *k* = 1,2, ··· , *K* - 1;
fourth codebook, the fourth codebook comprises *N*₁ - 1 ***W*₄,** and each of the *N*₁ *- 1* ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2, ···, *N*₁ - 1 , ···, *i*_{*K*-1} = 0,1,2, ···, *N*_{*K*-1} - 1 ; wherein values of Np are configured by higher layer parameters or predefined in a protocol, p = 1,2, ···, K - 1;
fifth codebook, the fifth codebook comprises P-1 ***W*₅,** and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ···, *P* - 1 ; *k* = 1,2, ···, *K* ; wherein a value of P is configured by higher layer parameters, P is less than or equal to N;
sixth codebook, the sixth codebook comprises P₁ - 1 ***W*₆,** and each of the P₁-1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ···, P₁ - 1 , ···, i_{K-1} = 0,1,2, ··· , P_{K-1} - 1; wherein values of P_{q} are configured by higher layer parameters, q = 1, 2, ··· , K - 1;
wherein N is a positive integer, and K is determined by the number of measurement objects.

22. The method according to claim 18, wherein sending, by the terminal to the network side device, the first phase-related information corresponding to the multiple measurement objects, comprises at least one of:
jointly reporting, by the terminal, the first phase-related information related to a same delay-related information;
jointly reporting, by the terminal, the first phase-related information corresponding to measurement resources of a same measurement object;
jointly reporting, by the terminal, a plurality of the first phase-related information corresponding to a same subband;
jointly reporting, by the terminal, the first phase-related information of a same type; or
jointly reporting, by the terminal, all determined first phase-related information.

23. A measurement acquisition method, comprising:
receiving, by a network side device, first delay-related information and first phase-related information corresponding to multiple measurement objects sent by a terminal;
wherein the first delay-related information is related to the first phase-related information.

24. The method according to claim 23, further comprising:
receiving, by the network side device, amplitudes corresponding to the multiple measurement objects sent by the terminal.

25. The method according to claim 23, wherein the first phase-related information is determined based on a quantization codebook;
the quantization codebook comprises at least one of the following:
first codebook, the first codebook comprises N-1 ***W*₁,** and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$, *i* = 0,1,2, ···, *N* - 1;
second codebook, the second codebook comprises P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ··· , *P -* 1; wherein a value of P is configured by higher layer parameters, P is less than or equal to N;
third codebook, the third codebook comprises N-1 ***W*₃,** and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ···, *N* -1; *k =* 1,2, ···, *K -* 1;
fourth codebook, the fourth codebook comprises *N*₁ *- 1* ***W*₄,** and each of the *N*₁ *- 1* ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2, ···, *N*₁ - 1, ···, *i*_{*K*-1} = 0,1,2, ···, *N*_{*K*-1} - 1; wherein values of Np are configured by higher layer parameters or predefined in a protocol, p = 1,2, ···, K - 1;
fifth codebook, the fifth codebook comprises P-1 ***W*₅,** and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2,···, *P* - 1; *k* = 1,2, ···, *K* ; wherein a value of P is configured by higher layer parameters, P is less than or equal to N;
sixth codebook, the sixth codebook comprises P₁ - 1 ***W*₆,** and each of the P₁-1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ···, P₁ - 1 , ···, i_{K-1} = 0,1,2, ···, P_{K-1} - 1; wherein values of P_{q} are configured by higher layer parameters, q = 1, 2, ···, K - 1;
wherein N is a positive integer, and K is determined by the number of measurement objects.

26. The method according to claim 23, further comprising:
receiving, by the network side device, at least one of the following sent by the terminal:
a maximum phase value or a minimum phase value of each set of phase-related information;
a subband index corresponding to the maximum phase value or the minimum phase value in each set of phase-related information;
a delay-related information index corresponding to the maximum phase value or the minimum phase value in each set of phase-related information; or
a measurement resource index corresponding to the maximum phase value or the minimum phase value in each set of phase-related information.

27. The method according to claim 24, wherein the amplitudes corresponding to the multiple measurement objects comprise at least one of:
a weighting value of the first delay-related information;
a weighting value of the first phase-related information;
a weighting coefficient of the first delay-related information; or
a weighting coefficient of the first phase-related information.

28. The method according to claim 24, further comprising:
receiving, by the network side device, at least one of the following sent by the terminal:
a maximum amplitude of each set of amplitudes;
a subband index corresponding to the maximum amplitude in each set of amplitudes;
a delay difference index corresponding to the maximum amplitude in each set of amplitudes; or
a measurement resource index corresponding to the maximum amplitude in each set of amplitudes.

29. The method according to claim 23, wherein the first delay-related information corresponding to the multiple measurement objects comprises:
reference delay-related information and differences corresponding to the reference delay-related information.

30. The method according to claim 23, further comprising:
receiving, by the network side device, at least one of the following sent by the terminal:
information of a phase range used for quantization; or
information of a time range used for quantization.

31. A measurement acquisition method, comprising:
receiving, by a network side device, first delay-related information or first phase-related information corresponding to multiple measurement objects sent by a terminal; and
receiving, by the network side device, information of a phase range or information of a time range used for quantization sent by the terminal.

32. The method according to claim 31, wherein the phase range or the time range comprises at least one of:
[0, a];
[a, b];
[-a, 0];
[-a, b]; or
a range number w, wherein a range corresponding to w is pre-specified in a protocol;
wherein a and b are positive numbers; and
the receiving, by the network side device, the information of the phase range or the information of the time range used for quantization sent by the terminal comprises: receiving, by the network side device, at least one of a, b and w sent by the terminal.

33. The method according to claim 32, wherein quantization granularities or numbers of quantization values are different for different phase ranges or different time ranges, and a quantization granularity value or a number of quantization values corresponding to a phase range or a time range is pre-specified by a protocol.

34. The method according to claim 31, wherein the phase-related information is determined based on at least one of the following codebooks:
the phase-related information is determined based on at least one of the following codebooks:
first codebook, the first codebook comprises N-1 ***W*₁,** and each of the N-1 ***W*₁** is different, ${W}_{1} = \frac{1}{\sqrt{2}} \left[\begin{matrix}1 \\ {e}^{\frac{j 2 πi}{N}}\end{matrix}\right]$, *i* = 0,1,2, ···, N - 1;
second codebook, the second codebook comprises P-1 ***W*₂,** and each of the P-1 ***W*₂** is different, ${W}_{2} = \frac{1}{\sqrt{2}} \left[\begin{matrix}1 \\ {e}^{\frac{j 2 πi}{N}}\end{matrix}\right]$, *i* = 0,1,2, ···, P-1; wherein a value of P is configured by higher layer parameters, P is less than or equal to N;
third codebook, the third codebook comprises N-1 ***W*₃,** and each of the N-1 ***W*₃** is different, ${W}_{3} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ···, *N* - 1; *k* = 1,2, ···, *K* - 1;
fourth codebook, the fourth codebook comprises *N*₁ *- 1* ***W*₄,** and each of the *N*₁ *- 1* ***W*₄** is different, ${W}_{4} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, *i*₁ = 0,1,2, ···, *N*₁ - 1 , ··· , *i*_{*K*-1} = 0,1,2, ··· , *N*_{*K*-1} - 1 ; wherein values of Np are configured by higher layer parameters or predefined in a protocol, p = 1,2, ··· , K - 1;
fifth codebook, the fifth codebook comprises P-1 ***W*₅,** and each of the P-1 ***W*₅** is different, ${W}_{5} = \frac{1}{\sqrt{K}} \left[\begin{matrix}1 \\ {e}^{\frac{j 2 {πi}_{1}}{N}} \\ ⋮ \\ {e}^{\frac{j 2 {πi}_{K - 1}}{N}}\end{matrix}\right]$, *iₖ* = 0,1,2, ··· , *P* - 1; *k =* 1,2, ···, *K* ; wherein a value of P is configured by higher layer parameters, P is less than or equal to N;
sixth codebook, the sixth codebook comprises P₁ - 1 ***W*₆,** and each of the P₁-1 ***W*₆** is different, ${W}_{6} = \frac{1}{\sqrt{K}} \left[\begin{matrix}1 \\ {e}^{\frac{j 2 {πi}_{1}}{{N}_{1}}} \\ ⋮ \\ {e}^{\frac{j 2 {πi}_{K - 1}}{{N}_{K - 1}}}\end{matrix}\right]$, i₁ = 0,1,2, ···, P₁ - 1 , ··· , i_{K-1} = 0,1,2, ··· , P_{K-1} - 1; wherein values of P_{q} are configured by higher layer parameters, q = 1,2, ··· , K - 1;
wherein N is a positive integer, and K is determined by the number of measurement objects.

35. A measurement reporting apparatus, comprising: a memory, a transceiver, and a processor;
wherein the memory is configured to store program instructions;
the transceiver is configured to transmit and receive data under control of the processor; and
the processor is configured to read the program instructions in the memory and perform operations of:
determining multiple measurement objects; and
sending, to a network side device, first delay-related information and first phase-related information corresponding to the multiple measurement objects;
wherein the first delay-related information is related to the first phase-related information.

36. The measurement reporting apparatus according to claim 35, wherein the processor is further configured to:
send, to the network side device, amplitudes corresponding to the multiple measurement objects.

37. The measurement reporting apparatus according to claim 35, wherein the processor is further configured to:
in a case of sending the first phase-related information to the network side device, send information of a phase range used for quantization; and
in a case of sending the first delay-related information to the network side device, send information of a time range used for quantization.

38. A measurement reporting apparatus, comprising:
a first determining module configured to determine multiple measurement objects; and
a first sending module configured to send, to a network side device, first delay-related information and first phase-related information corresponding to the multiple measurement objects;
wherein the first delay-related information is related to the first phase-related information.

39. A measurement reporting apparatus, comprising: a memory, a transceiver, and a processor;
wherein the memory is configured to store program instructions;
the transceiver is configured to transmit and receive data under control of the processor; and
the processor is configured to read the program instructions in the memory and perform operations of:
determining multiple measurement objects;
sending, to a network side device, first delay-related information or first phase-related information corresponding to the multiple measurement objects;
in a case of sending the first phase-related information to the network side device, sending information of a phase range used for quantization; and
in a case of sending the first delay-related information to the network side device, sending information of a time range used for quantization.

40. A measurement reporting apparatus, comprising:
a second determining module configured to determine multiple measurement objects;
a second sending module configured to send, to a network side device, first delay-related information or first phase-related information corresponding to the multiple measurement objects;
a third sending module configured to, in a case of sending the first phase-related information to the network side device, send information of a phase range used for quantization; and
a fourth sending module configured to, in a case of sending the first delay-related information to the network side device, send information of a time range used for quantization.

41. A measurement acquisition apparatus, comprising: a memory, a transceiver, and a processor;
wherein the memory is configured to store program instructions;
the transceiver is configured to transmit and receive data under control of the processor; and
the processor is configured to read the program instructions in the memory and perform an operation of:
receiving first delay-related information and first phase-related information corresponding to multiple measurement objects sent by a terminal;
wherein the first delay-related information is related to the first phase-related information.

42. A measurement acquisition apparatus, comprising:
a first receiving module configured to receive first delay-related information and first phase-related information corresponding to multiple measurement objects sent by a terminal;
wherein the first delay-related information is related to the first phase-related information.

43. A measurement acquisition apparatus, comprising: a memory, a transceiver, and a processor;
wherein the memory is configured to store program instructions;
the transceiver is configured to transmit and receive data under control of the processor; and
the processor is configured to read the program instructions in the memory and perform operations of:
receiving first delay-related information or first phase-related information corresponding to multiple measurement objects sent by a terminal; and
receiving information of a phase range or information of a time range used for quantization sent by the terminal.

44. A measurement acquisition apparatus, comprising:
a second receiving module configured to receive first delay-related information or first phase-related information corresponding to multiple measurement objects sent by a terminal; and
a third receiving module configured to receive information of a phase range or information of a time range used for quantization sent by the terminal.

45. A processor-readable storage medium storing a computer program, wherein the computer program is used to cause a processor to perform the measurement reporting method according to any one of claims 1 to 17, or the measurement reporting method according to any one of claims 18 to 22, or the measurement acquisition method according to any one of claims 23 to 30, or the measurement acquisition method according to any one of claims 31 to 34.
